(19) Europäisches Patentamt
European Patent Office
Office européen des brevets

(11) **EP 4 364 828 A1**

(12) **EUROPEAN PATENT APPLICATION**
published in accordance with Art. 153(4) EPC

(43) Date of publication:
**08.05.2024 Bulletin 2024/19**

(21) Application number: **22833179.9**

(22) Date of filing: **28.06.2022**

(51) International Patent Classification (IPC):
*B01D 61/00* $^{(2006.01)}$    *B01D 63/02* $^{(2006.01)}$
*B01D 69/00* $^{(2006.01)}$    *B01D 69/02* $^{(2006.01)}$
*B01D 69/08* $^{(2006.01)}$    *B01D 69/10* $^{(2006.01)}$
*B01D 69/12* $^{(2006.01)}$    *B01D 71/56* $^{(2006.01)}$
*B01D 71/68* $^{(2006.01)}$

(52) Cooperative Patent Classification (CPC):
**B01D 61/00; B01D 63/02; B01D 69/00;
B01D 69/02; B01D 69/08; B01D 69/10;
B01D 69/12; B01D 71/56; B01D 71/68;**
Y02A 20/131

(86) International application number:
**PCT/JP2022/025813**

(87) International publication number:
**WO 2023/277033 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.06.2021   JP 2021106811**

(71) Applicant: **Asahi Kasei Kabushiki Kaisha
Tokyo 1000006 (JP)**

(72) Inventor: **HOTTA, Daisuke
Tokyo 100-0006 (JP)**

(74) Representative: **D Young & Co LLP
3 Noble Street
London EC2V 7BQ (GB)**

(54) **FORWARD OSMOSIS MEMBRANE AND METHOD FOR PRODUCING SAME**

(57)    The present invention provides: a forward osmosis membrane which achieves good water permeability, good rejection performance and good resistance against the counter pressure at the same time; and a method for producing a forward osmosis membrane, the method being capable of easily producing the above-described forward osmosis membrane. One embodiment of the present invention provides a forward osmosis membrane which comprises a porous supporting membrane and a separation function layer that is arranged on the porous supporting membrane, wherein: the porous supporting membrane is in contact only with the separation function layer; and the separation function layer is composed of a polyamide layer. With respect to this forward osmosis membrane, if the surface of the separation function layer is measured by X-ray photoelectron spectroscopy, the ratio (O533eV/N ratio) of the relative element concentration obtained by curve fitting centered at 533 eV in the O1s spectrum to the relative element concentration obtained from N1s spectrum is 0.29 to 0.53; and with respect to the IR measurement of the surface of the separation function layer, the ratio (IR1720/IR1650) of the peak top intensity at 1720 cm-1 to the peak top intensity at 1650 cm-1 is 0.25 or less.

EP 4 364 828 A1

**Description**

FIELD

The present invention relates to a forward osmosis membrane and a method for producing the same.

BACKGROUND

There are conventionally known methods using microfiltration membranes, ultrafiltration membranes, nanofiltration membranes, forward osmosis membranes, and reverse osmosis membranes as membrane separation methods for selectively separating a desired substance from a mixture. Forward osmosis membranes and reverse osmosis membranes are useful for separating low molecular weight substances such as solvents, and usually have a porous support and a separation function layer laminated on the surface thereof. In forward osmosis method, when a feed solution and a draw solution including a draw substance with an osmotic pressure-increasing action and thereby having a higher osmotic pressure than the feed solution are brought into contact via a forward osmosis membrane, the osmotic pressure difference generated on both surfaces of the separation function layer as a driving force is used to transfer a solvent (for example, water) from the feed solution (dilute solution) to the draw solution (concentrated solution). In other words, in the forward osmosis process, the solvent is transferred from the dilute solution side to the concentrated solution side by utilizing the osmotic pressure difference. In contrast, in the reverse osmosis process, the solvent is transferred back from the concentrated solution side to the dilute solution side against the osmotic pressure difference by pressurizing the concentrated solution side.

When treating an aqueous treatment target liquid using a forward osmosis membrane or a reverse osmosis membrane, water permeability may decrease over time due to continuous use of the membrane. Thus, various methods have been proposed to reduce such decrease in water permeability.

PTL 1 discloses a forward osmosis membrane provided with a separation active layer of a macromolecular polymer on a surface of a microporous support membrane, wherein when the forward osmosis membrane is interposed between purified water as a feed solution arranged on the side of the separation active layer and a specific draw solution arranged on the side of the microporous support membrane, the reverse salt diffusion amount into the feed solution is a specific value or less and the water permeation amount into the draw solution is a specific value or greater.

PTL 2 discloses a polyamide reverse osmosis composite membrane, comprising (a) a microporous support, (b) a polyamide layer on the microporous support, and (c) a hydrophilic coating applied on the polyamide layer, wherein the hydrophilic coating is formed by covalently bonding a hydrophilic compound to the polyamide layer, the hydrophilic compound comprises (i) at least one reactive group adapted to covalently bond directly to the polyamide layer, where the at least one reactive group is at least one of a primary amine and a secondary amine; and (ii) at least one non-terminal hydroxyl group, and wherein the hydrophilic coating provides a membrane surface with oxygen and nitrogen in a ratio (O/N) of 1.6 or greater as measured by X-ray photoelectron spectroscopy (XPS) and a water contact angle on the membrane surface of 40° or less as measured by a goniometer.

PTL 3 discloses a composite semipermeable membrane comprising a support membrane comprising a base material and a porous support layer; and a separation function layer provided on the porous support layer, wherein the separation function layer comprises a hydrophilic polymer that is a polymer of a crosslinked polyamide and a monomer having an ethylenically unsaturated group; a ratio (O/N ratio) of number of oxygen atoms to number of nitrogen atoms on a surface of the separation function layer measured by X-ray photoelectron spectroscopy is 1.5 or greater and 10 or less, and a standard deviation of the ratio is 0.15 or greater.

NPL 1 discloses a reverse osmosis membrane in which flux is improved by a surface treatment with hydrofluoric acid and fluorosilicic acid.

[CITATION LIST]

[PATENT LITERATURE]

[PTL 1] WO 2020/241860
[PTL 2] Japanese Unexamined Patent Publication (Kokai) No. 2010-012455
[PTL 3] WO 2018/003943

[NON-PATENT LITERATURE]

[NPL 1] Mukherjee et al., Flux enhancement of reverse osmosis membranes by chemical surface modification, Journal of Membrane Science, 97 (1994) 231-249

SUMMARY

[TECHNICAL PROBLEM]

Forward osmosis method and reverse osmosis method share use of semipermeable membranes but have completely different operating principles. Thus, a semipermeable membrane useful for one method may not necessarily be useful for the other. Forward osmosis method has an advantage of simplifying the membrane separation system configuration compared to reverse osmosis method. However, according to studies by the present inventors, the following problems may occur when a reverse osmosis membrane is used as a forward osmosis membrane. Specifically, in a reverse osmosis membrane, it is normally assumed that the reverse osmosis membrane is pressurized (more specifically, pressurized by a liquid) only on one side of the membrane, and it is thus sufficient to consider only improving water permeability for the purpose of improving the treatment speed. In the case of a forward osmosis membrane, because of operating principles which allow liquids to be present on both sides of the membrane, effective water permeability improvement methods for a reverse osmosis membrane (for example, hydrophilization followed by pressurization operation) does not necessarily result in a sufficient improvement in water permeability for a forward osmosis membrane.

When a reverse osmosis membrane, which is often structured to withstand high-pressure loads, is used as a forward osmosis membrane, diffusibility of the draw solution for forward osmosis is hindered, resulting in low water permeability and a high reverse salt diffusion amount and causing inconvenience as a forward osmosis membrane.

In forward osmosis membranes, because of operating principles which allow liquids to be present on both sides of the membrane, it is necessary to ensure blocking properties (i.e., ability to block outflow of a draw substance in the draw solution to the feed solution side) at the same time as water permeability.

In forward osmosis membranes, due to operating principles which allow liquids to be present on both sides of the membrane, in addition to pressurization from the feed solution side to the draw solution side during normal operation, there are cases where the membrane is pressurized in the opposite direction (reverse pressure) due to improper setting of operating conditions. Thus, resistance to reverse pressure is also required.

However, there is room for improving the technique described in PTL 1 in terms of compatibility between water permeability, blocking properties, and resistance to reverse pressure. Although the hydrophilic coating in the reverse osmosis membranes described in PTL 2 and 3 can improve water permeability for a reverse osmosis membrane, the hydrophilic coating results in decreased diffusion of the draw solution and in turn decreased water permeability if the membrane is used as a forward osmosis membrane. There is also a concern that the hydrophilic coating may cause substances derived from the coating to be eluted from the membrane. The technique described in NPL 1 is to obtain a reverse osmosis membrane in which flux is improved by surface-treating a membrane composed of a base material and a porous support membrane with a high-concentration hydrophilic solvent. However, in such a membrane, since the base material and the porous support membrane easily separate at the interface, resistance to reverse pressure becomes a problem when the membrane is used as a forward osmosis membrane. Further, when the reverse osmosis membrane disclosed in NPL 1 is used as a forward osmosis membrane, there is a problem that when attempting to improve the flux, the presence of a base material hinders diffusibility of the draw solution, and sufficient water permeability cannot be obtained.

An object of the present invention is to solve the above problems and provide a forward osmosis membrane that simultaneously achieves satisfactory water permeability, satisfactory blocking properties, and satisfactory resistance to reverse pressure and a method for producing a forward osmosis membrane capable of easily producing such a forward osmosis membrane.

[SOLUTION TO PROBLEM]

The present disclosure encompasses the following items.

[1] A forward osmosis membrane comprising a porous support membrane and a separation function layer arranged on the porous support membrane, wherein

the porous support membrane is in contact with the separation function layer only;
the separation function layer is a polyamide layer;
a ratio ($O_{533\,eV}$/N ratio) of a relative elemental concentration obtained by curve fitting centered at 533 eV in O1s spectrum to a relative elemental concentration obtained from N1s spectrum when a surface of the separation function layer is measured by X-ray photoelectron spectroscopy is 0.29 to 0.53; and

a ratio ($IR_{1720}/IR_{1650}$) of an intensity of a peak top at 1720 cm$^{-1}$ to an intensity of a peak top at 1650 cm$^{-1}$ in an IR measurement of the separation function layer surface is 0.25 or less.

[2] The forward osmosis membrane according to the above item 1, wherein the ratio ($O_{533\,eV}$/N ratio) is 0.30 to 0.53.

[3] The forward osmosis membrane according to the above item 1 or 2, wherein the ratio ($O_{533\,eV}$/N ratio) is 0.35 to 0.51.

[4] The forward osmosis membrane according to any of the above items 1 to 3, wherein a ratio (O/N ratio) of number of oxygen atoms to number of nitrogen atoms when a surface of the separation function layer is measured by X-ray photoelectron spectroscopy is 1.30 to 1.70.

[5] The forward osmosis membrane according to any of the above items 1 to 4, wherein a ratio (O/N ratio) of number of oxygen atoms to number of nitrogen atoms when a surface of the separation function layer is measured by X-ray photoelectron spectroscopy is 1.40 to 1.65.

[6] The forward osmosis membrane according to any of the above items 1 to 5, wherein the porous support membrane is a hollow-fiber membrane.

[7] The forward osmosis membrane according to the above item 6, wherein the separation function layer is arranged on an inner surface of the hollow-fiber membrane.

[8] The forward osmosis membrane according to any of the above items 1 to 7, wherein the porous support membrane comprises polysulfone or polyethersulfone as a main component.

[9] The forward osmosis membrane according to any of the above items 1 to 8, wherein an ethanol swelling rate of the porous support membrane is 1% to 5%.

[10] The forward osmosis membrane according to any of the above items 1 to 9, wherein a surface pore size of the surface of the porous support membrane in contact with the separation function layer is 1 nm to 15 nm.

[11] The forward osmosis membrane according to any of the above items 1 to 10, wherein a surface pore size of the surface of the porous support membrane in contact with the separation function layer is 2.5 nm or more.

[12] The forward osmosis membrane according to any of the above items 1 to 11, wherein a surface pore size of the surface of the porous support membrane in contact with the separation function layer is 11 nm or less.

[13] The forward osmosis membrane according to any of the above items 1 to 12, wherein a membrane thickness of the porous support membrane is 50 μm to 400 μm.

[14] The forward osmosis membrane according to any of the above items 1 to 13, wherein the separation function layer has an irregular structure.

[15] The forward osmosis membrane according to any of the above items 1 to 14, wherein the separation function layer has an arithmetic mean height of 60 nm or more.

[16] A method for producing a forward osmosis membrane comprising a porous support membrane and a separation function layer arranged on the porous support membrane, comprising the steps of:

forming a macromolecular polymer constituting a separation function layer on a porous support membrane to obtain a composite membrane;

subjecting the composite membrane to a wet-heat treatment to obtain a wet-heat-treated membrane; and bringing the wet-heat-treated membrane into contact with a hydrophilic organic compound, wherein when a forward osmosis evaluation is carried out while the forward osmosis membrane is interposed between purified water as a feed solution arranged on the separation function layer side and a 3.5% by mass sodium chloride aqueous solution as a draw solution arranged on the porous support membrane side and a pressure of 40 kPa is applied with the draw solution side as positive,

a water permeation amount F into the draw solution is 5.0 kg/(m$^2$ × hr) or more, and

the water permeation amount F (kg/(m$^2$ × hr)) and a reverse salt diffusion amount R (g/(m$^2$ × hr)) to the feed solution satisfy a relationship represented by a formula below:

$$R \le 0.05 \times e^{0.225 \times F}.$$

[17] The method according to the above item 16, wherein the porous support membrane is in contact with the separation function layer only.

[18] The method according to the above item 16 or 17, wherein the porous support membrane is a hollow-fiber membrane.

[19] The method according to the above item 18, wherein the separation function layer is arranged on an inner surface of the hollow-fiber membrane.

[20] The method according to any of the above items 16 to 19, wherein the porous support membrane comprises polysulfone or polyethersulfone as a main component.

[21] The method according to any of the above items 16 to 20, wherein the separation function layer is a layer of crosslinked polyamide obtained by reacting a polyfunctional amine with a polyfunctional acid halide.

[22] The method according to any of the above items 16 to 21, wherein the wet-heat treatment is carried out in a heated and pressurized wet gas atmosphere.

[23] The method according to any of the above items 16 to 22, wherein the wet-heat treatment is carried out by bringing the composite membrane into contact with water vapor at 100 °C or higher.

[24] The method according to any of the above items 16 to 23, wherein the hydrophilic organic compound is an alcohol having 1 to 4 carbon atoms.

[25] The method according to any of the above items 16 to 24, wherein the contact is carried out by bringing an aqueous solution containing the hydrophilic organic compound at a concentration of 40% by mass or greater into contact with the wet-heat-treated membrane.

[26] The method according to any of the above items 16 to 25, wherein the contact is carried out for 5 min or more.

[27] The method according to any of the above items 16 to 26, wherein the contact is carried out by one or more selected from the group consisting of immersion, liquid flow, and filtration

[28] The method according to any of the above items 16 to 27, wherein an ethanol swelling rate of the porous support membrane is 1% to 5%.

[29] The method according to any of the above items 16 to 28, wherein a surface pore size of the porous support membrane is 15 nm or less.

[30] The method according to any of the above items 16 to 29, wherein a surface pore size of the porous support membrane is 3 nm to 10 nm.

[31] The method according to any of the above items 16 to 30, wherein a membrane thickness of the porous support membrane is 50 $\mu$m to 400 $\mu$m.

[32] The method according to any of the above items 16 to 31, wherein a salt permselectivity R/F, which is a ratio of the reverse salt diffusion amount R to the water permeation amount F, is 0.10 g/kg or less.

[33] The method according to any of the above items 16 to 32, wherein a salt permselectivity R/F, which is a ratio of the reverse salt diffusion amount R to the water permeation amount F, is 0.07 g/kg or less.

[34] The method according to any of the above items 16 to 33, wherein a salt permselectivity R/F, which is a ratio of the reverse salt diffusion amount R to the water permeation amount F, is 0.035 g/kg or less.

[35] The method according to any of the above items 16 to 34, wherein the water permeation amount F is 8.0 kg/(m$^2$ × hr) or more.

[36] The method according to any of the above items 16 to 35, wherein the water permeation amount F is 10.0 kg/(m$^2$ × hr) or more.

[ADVANTAGEOUS EFFECTS OF INVENTION]

According to one aspect of the present invention, a forward osmosis membrane in which satisfactory water permeability, satisfactory blocking properties, and satisfactory resistance to reverse pressure are simultaneously achieved and a method for producing a forward osmosis membrane capable of easily producing such a forward osmosis membrane can be provided.

BRIEF DESCRIPTION OF DRAWINGS

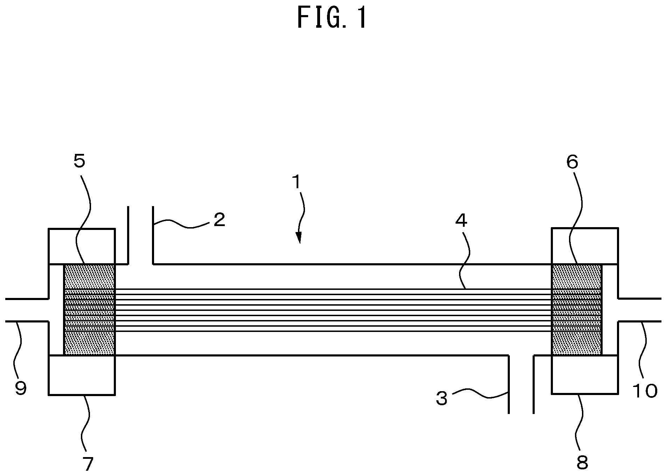

FIG. 1 is a schematic cross-sectional diagram showing the structure of a hollow-fiber membrane module as one example of the forward osmosis membrane module.

DESCRIPTION OF EMBODIMENTS

Hereinafter, the embodiments exemplifying the present invention (hereinafter, referred to as the present embodiments) will be described. However, the present invention is by no means limited to these embodiments.

<<Forward osmosis membrane>>

One aspect of the present invention is to provide a forward osmosis membrane comprising a porous support membrane and a separation function layer arranged on the porous support membrane. In one aspect, the porous support membrane is in contact with the separation function layer only. In one aspect, a ratio ($O_{533\text{ eV}}$/N ratio) of a relative elemental concentration obtained by curvefitting centered at 533 eV in O1s spectrum to a relative elemental concentration obtained from N1s spectrum when a surface of the separation function layer is measured by X-ray photoelectron spectroscopy is 0.29 to 0.53. In one aspect, a ratio ($IR_{1720}/IR_{1650}$) of an intensity of a peak top at 1720 cm$^{-1}$ to an intensity of a peak top at 1650 cm$^{-1}$ in an IR measurement of the separation function layer is 0.25 or less.

In one aspect, a surface pore size of the surface of the porous support membrane in contact with the separation function layer is 1 nm to 15 nm. In one aspect, a membrane thickness of the porous support membrane is 50 μm to 400 μm. In one aspect, the separation function layer has an irregular structure. In one aspect, a ratio (O/N ratio) of number of oxygen atoms to number of nitrogen atoms when a surface of the separation function layer is measured by X-ray photoelectron spectroscopy is 1.30 to 1.70.

[Porous support membrane]

The porous support membrane serves to impart strength to the separation function layer. The porous support membrane may have the ability to separate particles insoluble in a solvent, but preferably does not substantially have the ability to separate ions dissolved in the solvent. The composition of the porous support membrane is not particularly limited, but is preferably formed of a resin, and more preferably formed of a thermoplastic resin. A thermoplastic resin herein means a material that exhibits properties of deformation or flow by an external force when heated, and is a chain polymer in one aspect.

Examples of the thermoplastic resin include polysulfone, polyethersulfone, polyketone, polyamide, polyester, cellulose-based polymer, vinyl polymer, polyphenylene sulfide, polyphenylene sulfide sulfone, polyphenylene sulfone, and polyphenylene oxide. These homopolymers or copolymers can be used singly or in combination of two or more. The polymers encompass those having arbitrary functional groups on a main chain, a side chain, or a terminal (i.e., derivatives).

As specific examples of the thermoplastic resin, the following resins are exemplified.

Examples of the cellulose-based polymer can include cellulose acetate and cellulose nitrate; and
examples of the vinyl polymer can include polyethylene, polypropylene, polyvinyl chloride, chlorinated polyvinyl chloride, and polyacrylonitrile.

Among the resins exemplified above, particularly one or more selected from polysulfone, polyacrylonitrile, polyamide, polyester, polyvinyl alcohol, polyphenylene sulfide sulfone, polyphenylene sulfone, polyphenylene sulfide, polyether sulfone, polyvinylidene fluoride, cellulose acetate, polyvinyl chloride, and chlorinated polyvinyl chloride are preferably used. More preferable examples include cellulose acetate, polysulfone, polyethersulfone, polyketone, and polyacrylonitrile. Polysulfone or polyethersulfone, particularly polysulfone, is even more preferable because of high chemical, mechanical, and thermal stability, wide use and availability, and ease of molding.

The porous support membrane may be composed of a material comprising a thermoplastic resin selected from the above as a main component. "Comprising as a main component" refers to comprising greater than 50% by mass, 60% by mass or greater, 70% by mass or greater, 80% by mass or greater, 90% by mass or greater, or 95% by mass or greater of one or more specific thermoplastic resins relative to the total mass of the porous support membrane. The porous support membrane may consist only of a thermoplastic resin selected from the above.

The shape of the porous support membrane is preferably in a film (flat membrane) or hollow-fiber form, or a chemically or physically modified form thereof. When modularized, the porous support membrane is more preferably a hollow-fiber membrane in that a forward osmosis membrane having a larger membrane area can be stored in a smaller space.

In the present disclosure, the membrane area represents an area of a region where the forward osmosis membrane contacts a feed solution and can exhibit a separation function, i.e., an area of the portion of the forward osmosis membrane that comes into contact with the feed solution. More specifically, for example, in the case of a hollow-fiber forward osmosis membrane module which supplies a feed solution to the inside, from the length excluding adhesive fixing portions in the module (also referred to as effective length), inner diameter, and number of hollow-fiber forward osmosis membranes, the membrane area (inner surface area of the hollow-fiber forward osmosis membrane) is defined by the following formula.

$$a = c \times \pi \times b \times n$$

wherein a is the inner surface area (m$^2$) of the hollow-fiber forward osmosis membranes; b is the length (m) of the hollow-fiber forward osmosis membranes excluding adhesive fixing portions; c is the inner diameter (m) of a hollow-fiber forward osmosis membrane; and n is the number of hollow-fiber forward osmosis membranes.

(Surface pore size)

In the forward osmosis membrane of the present embodiment, it is preferable that the surface pore size of the surface of the porous support membrane in contact with the separation function layer be controlled within a specific range. As a result, the separation function layer partially enters the pores of the porous support membrane, the separation function layer is firmly retained on the porous support membrane due to an anchoring effect, and an advantage of the separation function layer being difficult to separate from the porous support membrane even when a reverse pressure is applied is obtained. If the surface pore size is too small, the supply balance of material monomers of the separation function layer on the porous support membrane may be disturbed when the material monomers are polymerized to form the separation function layer. Such a supply imbalance causes the formation of a separation function layer that has a low degree of crosslinking and easily separates from the porous support membrane. When the surface pore size is at least of a predetermined value, each solution easily diffuses through the porous support membrane to the interface between the porous support membrane and the separation function layer, and osmotic pressures on both surfaces of the separation function layer are easily ensured, thereby increasing water permeability as a forward osmosis membrane. Therefore, it is preferable that the surface pore size be at least of a predetermined value. When the structure of the surface of the porous support membrane in contact with the separation function layer is dense (i.e., surface pore size is small), since monomer supply is moderately slow and monomers remaining on the porous support membrane after a reaction can be further reacted as temperature rises and time passes, the separation function layer formed at the interface with the porous support membrane is formed thin and dense, thereby facilitating the hydrophilization treatment described below during the production of the separation function layer. Specifically, when the wet-heat treatment of the present disclosure and a further treatment with a hydrophilic organic compound are carried out during the production of the separation function layer, the separation function layer formed on the porous support membrane having a small surface pore size can retain more hydroxyl groups given by the hydrophilization treatment due to the contribution of the above structure (in one embodiment, the O/N ratio and $O_{533\,eV}$/N ratio are improved). A forward osmosis membrane having such a separation function layer can have high water permeability while having high blocking properties and high resistance to reverse pressure.

The above surface pore size is preferably 1 nm or more, 1.5 nm or more, 2 nm or more, 2.5 nm or more, 3 nm or more, 4 nm or more, or 5 nm or more from the viewpoint of obtaining a satisfactory anchoring effect and the viewpoint of forming a separation function layer having satisfactory mechanical strength and difficult to separate from the porous support membrane, and is preferably 15 nm or less, 13 nm or less, 12 nm or less, 11 nm or less, 10 nm or less, 9 nm or less, or 8 nm or less from the viewpoint of obtaining a satisfactory anchoring effect and the viewpoint of obtaining a satisfactory effect from hydrophilization of the separation function layer. The surface pore size is a value obtained by averaging the circular equivalent diameters of pores contained in an arbitrarily selected 1.0 $\mu$m $\times$ 1.0 $\mu$m visual field at a magnification of 50,000$\times$ in a surface observation image of the porous support membrane using a scanning electron microscope (SEM). Since it is preferable to obtain a uniform surface pore size across the entire porous support membrane, the surface pore size is preferably evaluated as an average value calculated from surface observation images of samples sampled from various sites of the porous support membrane. The surface pore size of a certain porous support membrane is substantially identical to each of the surface pore size of the porous support membrane facing the separation function layer when the separation function layer is formed on the porous support membrane, and the surface pore size of the porous support membrane exposed by removing the separation function layer from the forward osmosis membrane. Therefore, for example, the surface pore size of the porous support membrane exposed by removing the separation function layer from the forward osmosis membrane can be regarded as the surface pore size of the porous support membrane used to produce the forward osmosis membrane. As the method for removing the separation function layer, a known method according to the chemical structure of the separation function layer can be used. As an example, when the separation function layer is composed of a crosslinked polyamide, the separation function layer can be decomposed and removed by immersing in an aqueous solution consisting of 2.0% by mass of sodium hypochlorite, 2.0% by mass of sodium hydroxide, and 0.15% by mass of calcium chloride at 60 °C or higher for 200 h or more. When decomposition is insufficient, the separation function layer can be decomposed and removed by combining two or more known methods. In the above decomposition and removal, a method in which the separation function layer is decomposed while not affecting the porous support membrane and/or the surface pore size of the porous support membrane is adopted. Whether or not the surface pore size of the porous support membrane is affected can be determined by observing the surface pore size before and after treatment when the porous support membrane only is treated in the same method as above. When the surface pore size of the porous support membrane changes due to the decomposition and removal method of the separation function layer, the surface pore size of the porous support membrane facing the separation function layer can be estimated in consideration of the change.

The surface pore size can be controlled by controlling the composition of the material polymer composition used to form the porous support membrane, and by the temperature of each solution when forming the porous support membrane by phase separation and the membrane formation environment (for example, temperature, humidity, and membrane formation time). For example, the surface pore size can be decreased by increasing the material polymer concentration of the material polymer composition, or the surface pore size can be increased by decreasing the material polymer concentration.

(Membrane thickness)

The membrane thickness of the porous support membrane is preferably 50 $\mu$m to 400 $\mu$m. In a forward osmosis membrane lacking a base material, it is desirable that the porous support membrane have a sufficient reinforcing effect on the separation function layer. The membrane thickness is preferably 50 $\mu$m or more, 80 $\mu$m or more, or 100 $\mu$m or more from the viewpoint of preventing deformation from becoming excessively large when the porous support membrane is swollen by a solvent and keeping reverse salt diffusion due to damage to the separation function layer during repeated use low, and is preferably 400 $\mu$m or less, 350 $\mu$m or less, 300 $\mu$m or less, or 250 $\mu$m or less from the viewpoint of water permeability.

(Outer diameter and inner diameter of hollow-fiber membrane)

In one aspect, the outer diameter and the inner diameter of the porous support membrane, in the case of a hollow-fiber membrane, are not particularly limited. In consideration of membrane formation stability, ease of handling, and membrane area of a module, it is preferable that the outer diameter be 100 $\mu$m to 3,000 $\mu$m and the inner diameter be 30 $\mu$m to 2,500 $\mu$m and it is more preferable that the outer diameter be 200 $\mu$m to 1,500 $\mu$m and the inner diameter be 50 $\mu$m to 1,000 $\mu$m. In consideration of both the ability of a feed solution containing a poorly soluble substance passing through hollow portions without hindrance and the strength, it is preferable that the outer diameter be 500 $\mu$m to 1,300 $\mu$m and the inner diameter be 200 $\mu$m to 1,000 $\mu$m. The membrane thickness of the hollow-fiber membrane refers to a numerical value obtained by dividing the difference between the outer diameter and the inner diameter of a cross-section obtained by cutting the hollow-fiber membrane along a plane perpendicular to the membrane surface direction (longitudinal direction) by 2. The inner diameter, outer diameter, and membrane thickness can each be measured by observing a cross-section of the hollow-fiber membrane using an optical microscope or a scanning electron microscope. The separation function layer may be removed from the forward osmosis membrane to observe the obtained porous support membrane.

In the forward osmosis membrane according to one aspect, the porous support membrane is in contact with the separation function layer only. In this case, when the forward osmosis membrane is combined with another member to form a module, the porous support membrane may be in contact with a member other than the forward osmosis membrane. The porous support membrane has an effect of reinforcing the separation function layer. In conventional forward and reverse osmosis membranes, the porous support membrane and the base material are combined to obtain a satisfactory reinforcing effect. However, when a forward osmosis membrane has a base material, a large difference in organic solvent swelling between the base material and the porous support membrane may cause damage to the forward osmosis membrane. For example, when the forward osmosis membrane is brought into contact with an organic solvent, if the porous support membrane swells more than the base material, the entire forward osmosis membrane deforms in order to release stress applied to the porous support membrane, whereby defects may occur in the separation function layer. Separation and cracking may also occur at the interface between the base material and the porous support membrane due to the difference in swelling therebetween. Therefore, in one aspect, the forward osmosis membrane lacks a base material.

The forward osmosis membrane is composed of a porous support membrane and a separation function layer in one aspect. However, the description "composed of a porous support membrane and a separation function layer" does not limit the constituent elements of the forward osmosis membrane to strictly a porous support membrane and a separation function layer only, and means that in addition thereto, optional components such as a dispersant, a coating agent, a humectant, and a preservative may be contained as long as the effect of the present invention is not impaired. These optional components may be inorganic compounds or organic compounds.

The base material is generally a porous material, and specific examples thereof include woven fabrics, nonwoven fabrics, mesh-like nets, and expanded sintered sheets. Examples of materials for the base material include polyesters, polyamides, polyolefins, and mixtures and copolymers thereof. The base material is generally a porous body having a larger pore size than the porous support membrane and the separation function layer. The base material may have an average pore size of 0.1 $\mu$m to 100 $\mu$m measured using a general porometer such as a Macro/Nano Porometer (manufactured by PMI), and/or may have a basis weight of 20 g/m$^2$ to 150 g/m$^2$, and/or may have an airflow rate of 0.5 cc/(cm$^2$ × sec) to 30 cc/(cm$^2$ × sec) measured by the Frazier method. The base material generally lacks a separation function for solutes such as ions, but may have a separation function for solids such as particles.

(Ethanol swelling rate)

In one aspect, the porous support membrane has an ethanol swelling rate in a specific range. It is considered that the separation function layer is retained on the porous support membrane by an anchoring effect by partially entering the pores of the porous support membrane. When the forward osmosis treatment is carried out in the presence of an organic solvent, the porous support membrane and the separation function layer swell with the organic solvent. Such swelling increases the pore size of the porous support membrane, reduces the anchoring effect, and causes the separation function layer to separate from the porous support membrane. Thus, it is desirable for the porous support membrane to not easily swell in an organic solvent. On the other hand, it is preferable for the porous support membrane to have a predetermined or higher ethanol swelling rate, from the viewpoint of improving diffusibility of the draw solution in contact with the forward osmosis membrane and from the viewpoint of hydrophilicity of the membrane for obtaining satisfactory water permeability. In other words, the swelling rate with respect to ethanol, which is a hydrophilic organic solvent, is an index of both hydrophilicity of the porous support membrane and swelling properties with respect to organic solvents. In one aspect, the ethanol swelling rate of the porous support membrane is preferably 1% or greater, 1.2% or greater, 1.5% or greater, 1.7% or greater, or 2% or greater from the viewpoint of obtaining satisfactory diffusibility of the draw solution and satisfactory water permeability, and is preferably 5% or less, 4.5% or less, 4% or less, 3.5% or less, or 3% or less from the viewpoint of obtaining satisfactory blocking properties and resistance to reverse pressure. The ethanol swelling rate is a value measured in accordance with [Examples] of the present disclosure.

[Separation function layer]

The separation function layer substantially carries a solute separation function in the forward osmosis membrane. More specifically, the separation function layer carries a function of separating a solvent in a liquid mixture and a solute such as ions dissolved in the solvent. The composition and thickness of the separation function layer are set according to the intended use of the forward osmosis membrane. The separation function layer may be present on one surface or both surfaces of the porous support membrane. When separation function layers are present on both surfaces of the porous support membrane, the thicknesses, separation performance, and salt blocking performance of the separation function layers on these surfaces may be the same or different from each other. The separation function layers on both surfaces of the porous support membrane may be continuous or discontinuous via the porous support membrane.

When separation function layers are arranged on both surfaces of the porous support membrane, the "separation function layer side" in the present disclosure means the side of the layer blocking the solute with a higher blocking rate in the entire forward osmosis membrane. Examples of a method of finding which side blocks the solute with a higher blocking rate include the following method.

The reverse salt diffusion amount into the feed solution is evaluated by interposing the forward osmosis membrane between purified water as the feed solution arranged on one side and the draw solution arranged on the other side and by reversing the arrangement of the solutions. When these two evaluation results are compared, the feed solution side of the arrangement where the reverse salt diffusion amount is smaller is the side blocking the solute of the draw solution with higher efficiency, i.e., can be used as the separation function layer side, and the opposite side as the support membrane side. In one aspect, the draw solution is a 3.5% by mass sodium chloride aqueous solution or a 50% by mass isopropanol aqueous solution. Particularly, the 3.5% by mass sodium chloride aqueous solution is used.

Examples of the material of the separation function layer include one or more materials selected from macromolecular polymers, inorganic substances, organic-inorganic hybrid compounds, and compositions obtained by dispersing or compatibilizing predetermined inorganic compounds or organic compounds therein. In one aspect, the separation function layer comprises a nitrogen-containing material. In one aspect, the surface of the separation function layer may be hydrophilized. The hydrophilization treatment can be carried out, for example, by contacting a macromolecular polymer with a hydrophilic organic compound described below.

In one aspect, the separation function layer is composed of a macromolecular polymer. A separation function layer composed of a macromolecular polymer preferentially permeates a solvent, blocks a solute, and has substantial separation performance. Examples of the above macromolecular polymer include polyamide, polyvinyl alcohol/polypiperazine amide, polypiperazine amide, polyimide, sulfonated polyethersulfone, and composite materials composed of two or more thereof, preferably one or more selected from the group consisting of polyamide, polyvinyl alcohol, polypiperazine amide, and polyimide. From the viewpoint of easily forming a defect-free thin membrane on the porous support membrane, the separation function layer is a polyamide layer in one aspect.

A polyamide layer is a layer comprising polyamide as a main component. In the present disclosure, "polyamide as a main component" means that the mass ratio of polyamide to the total mass of the separation function layer is 50% by mass or more, 75% by mass or more, 95% by mass or more, or 100% by mass. The polyamide layer is preferably formed of a polycondensation product of a polyfunctional amine and a polyfunctional acid halide. More preferably, the polyamide layer is mainly composed of a polyamide formed from a bifunctional amine and a trifunctional acid halide.

The formation of the polyamide layer comprises carrying out interfacial polycondensation on the surface of the porous support membrane using an aqueous solution containing a polyfunctional amine and an organic solvent solution containing a polyfunctional acid halide to form a polyamide skeleton. The organic solvent in the organic solvent solution containing a polyfunctional acid halide is preferably a water-immiscible organic solvent.

The method of forming the polyamide layer will be described below in detail.

(Average thickness of separation function layer)

The average thickness of the separation function layer is preferably as thin as possible if there are no pinholes. However, it is desirable to have an appropriate thickness to maintain mechanical strength and chemical resistance. In consideration of membrane formation stability and water permeation resistance, the average thickness of the separation function layer, for example, the average thickness of the separation function layer (macromolecular polymer thin membrane) composed of a macromolecular polymer is preferably 0.01 $\mu$m to 3 $\mu$m, more preferably 0.1 $\mu$m to 1 $\mu$m, and even more preferably 0.1 $\mu$m to 0.8 $\mu$m.

The average thickness of the separation function layer is measured by microscope observation. Specifically, for example, the separation function layer is embedded in a resin and then cut to prepare an ultra-thin slice. The obtained slice is subjected to a treatment such as staining, and then observed with a transmission electron microscope (TEM) or a scanning electron microscope (SEM). As a preferable method of measuring membrane thickness, there is a method in which an image obtained by photographing a cross-section of the separation function layer in the thickness direction with a scanning electron microscope is imported into an appropriate image processing software and image-processed. Examples of the image processing software include ImageJ (developer: U.S. National Institutes of Health). From the SEM image imported into ImageJ, the contour of the separation function layer is extracted, the inner portion thereof is painted, and the area of the separation function layer is calculated, and can be converted, using a calibration curved prepared in advance, to an average thickness of the separation function layer in one image.

More specifically, the extraction of the contour of the separation function layer is carried out, for example, by binarizing the SEM image imported into ImageJ by a known binarization method appropriately selected based on the obtained image, preferably the Otsu method. The contour of the contact interface between the porous support membrane and the separation function layer of the forward osmosis membrane can be obtained by calculating the average brightness of the membrane surface and the horizontal direction in the entire obtained binarized image, comparing the average brightness from the surface of the separation function layer towards the porous support membrane side, defining the horizontal direction of the portion where the average brightness is the highest as the contact interface between the porous support membrane and the separation function layer of the forward osmosis membrane, and defining the linear portion thereof as the contour. The contour on the surface of the separation function layer can also be defined by a curved line that connects portions having a contrast difference from the background in the obtained binarized image with a continuous line. The contour in the thickness direction may be both end portions of the acquired image. By connecting these lines, the contour of the separation function layer can be extracted.

The observation magnification of the cross-sectional image is, for example, preferably 5,000 to 30,000×, and more preferably 10,000×. The cross-sectional width (length in the direction parallel to the direction of the interface between the porous support membrane and the separation function layer) is preferably about 5 to 100 $\mu$m, more preferably 5 to 50 $\mu$m, even more preferably 5 to 20 $\mu$m, and most preferably 13 $\mu$m.

Although it is conceivable that the contact interface between the porous support membrane of the forward osmosis membrane and the separation function layer cannot be represented by a wavy line, as long as the membrane is not intentionally bent for measurement, the contact interface between the porous support membrane of the forward osmosis membrane and the separation function layer can be unambiguously determined by the same method.

(Irregular structure)

In one aspect, the separation function layer has an irregular structure on the surface (more specifically, the outermost surface that is an exposed surface). As a result, the separation function layer can satisfactorily follow the shape change of the porous support membrane even when the porous support membrane swells due to contact with an organic solvent, whereby a performance reduction of the forward osmosis membrane due to damage to the separation function layer can be avoided. In the present disclosure, an irregular structure means that the outermost surface (i.e., the surface not in contact with the porous support membrane) of the separation function layer has a plurality of protrusions and recesses that are repeated. In one aspect, the irregular structure is a structure having an irregular height, or an arithmetic mean height (Sa), of 40 nm or more. The arithmetic mean height (Sa) means an arithmetic mean height (Sa) defined by ISO 25178 when a surface roughness of the outermost surface of the separation function layer is measured.

The arithmetic mean height (Sa) of the irregular structure of the separation function layer is preferably 60 nm or more, and more preferably 100 nm or more from the viewpoint that when the porous support membrane is deformed, the separation function layer easily follows the deformation. In actual use, depending on the properties of the liquid that permeates through the forward osmosis membrane, a substance that is caught in the irregular structure of the separation function layer and easily adheres to the membrane surface can be mixed therein. In such a case, from the viewpoint of reducing deposits, the arithmetic mean height (Sa) of the separation function layer is preferably 300 nm or less, more preferably 200 nm or less, and even more preferably 150 nm or less.

In one aspect, the irregular structure may have an irregular repeating shape in a first direction while the protrusions may be elongated in a direction different from the first direction (in one aspect, substantially perpendicular to the first direction) by extending the protrusions in stripes (i.e., may have a pleated structure).

The arithmetic mean height (Sa) of the irregular structure of the separation function layer can be analyzed with an atomic force microscope (AFM).

Specifically, under the condition that the forward osmosis membrane is not dried out, AFM observation is carried out on an exposed separation function layer surface as an observation sample. The following conditions exemplify the measurement conditions.

Measurement mode: QNM in fluid (measurement in pure water)
Visual field size: 3-$\mu$m square
Probe used: OLTESPA

For example, under the above conditions, it is preferable to scan the outermost surface of the separation function layer, measure the arithmetic mean height (Sa), and evaluate as an average value of 9 samples.

In one aspect, the measurement method of the irregular structure of the separation function layer is as follows.

Under the condition that the membrane is not dried out, the hollow-fiber membrane is divided into three equal portions in the longitudinal direction to obtain three samples. At an arbitrary location of each of these three samples, preferably a portion where each sample is divided into two equal portions in the longitudinal direction, a sample is cut obliquely to expose the surface of the separation function layer, and an atomic force microscope observation is carried out to measure the arithmetic mean height of the separation function layer of the sample.

The operation is carried out on three forward osmosis membranes or three forward osmosis membranes cut out from one forward osmosis membrane module. The average value of the arithmetic mean heights of the separation function layers in a total of 9 samples can be used as the arithmetic mean height of the forward osmosis membrane.

When cutting out three forward osmosis membranes from one forward osmosis membrane module, it is preferable to cut the membranes from three locations in the radial direction of the forward osmosis membrane module: an outer peripheral portion, an intermediate portion, and a center portion. From such a cutting method, it is possible to evaluate variations of the entire module.

In the case of a flat forward osmosis membrane, under the condition that the membrane is not dried out, a method in which the membrane is divided into 9 portions to obtain 9 samples and the center portion of each sample is observed with an atomic force microscope can be adopted.

An irregular structure can be formed, for example, by control of the material monomer composition used for forming the separation function layer and monomer supply rate difference due to the size of the surface pore size of the porous support membrane. For example, in an aspect in which a material monomer composition is applied onto a porous support membrane to form a separation function layer by interfacial polymerization, when a surfactant is contained in the material monomer composition, the surfactant facilitates a continuous supply of monomers to the reaction interface even after the initial formation of the separation function layer, thereby forming an irregular structure. When the surface pore size of the porous support membrane is within a predetermined range, defects in the separation function layer that are generated initially are suppressed, and the membrane thickness of the separation function layer is moderately thinned and a monomer is easily supplied over time, whereby an irregular structure is easily formed.

(O/N ratio)

The ratio (O/N ratio) of the number of oxygen atoms to the number of nitrogen atoms when the surface (more specifically, the exposed surface) of the separation function layer is measured by X-ray photoelectron spectroscopy is an index of the proportion of hydrophilic structure on the surface of the separation function layer. In one aspect, nitrogen atoms are derived from the constituent material of the separation function layer, particularly a macromolecular polymer. Specifically, in one aspect, the separation function layer comprises a nitrogen-containing material. The presence of a hydrophilic structure on the surface of the separation function layer contributes to improvement of water permeability. However, excessive hydrophilicity increases reverse diffusion of the draw solution in forward osmosis method, and osmotic pressure difference via the separation function layer decreases, which rather decreases water permeability. Thus, it is preferable that the O/N ratio be controlled within a moderate range. The O/N ratio, in one aspect, is 1.30 or greater, 1.35 or greater, 1.40 or greater, 1.45 or greater, or 1.50 or greater, and in one aspect, is 1.70 or less, 1.65 or less, or 1.60 or less. The O/N ratio in the above range is particularly advantageous in a separation function layer composed of a polyamide consisting of a bifunctional amine having two or more amino groups per molecule and a trifunctional carboxylic acid halide having three or more carboxylic acid halide groups per molecule. The O/N ratio can be controlled by adjusting the constituent material of the separation function layer. For example, the composition of the macromolecular polymer constituting the separation function layer and the composition of the hydrophilic organic compound used for hydrophilizing the macromolecular polymer may be adjusted. The O/N ratio can be evaluated based on the method described in the Examples below.

($O_{533 eV}$/N ratio)

The ratio ($O_{533 eV}$/N ratio) of a relative elemental concentration of oxygen obtained by curve fitting centered at 533 eV in O1s spectrum to a relative elemental concentration of nitrogen obtained from N1s spectrum when the surface (more specifically, the exposed surface) of the separation function layer is measured by X-ray photoelectron spectroscopy is an index of the ratio of hydrophilic structures on the surface of the separation function layer, particularly an index of the ratio of water molecules and hydrophilic compound strongly adsorbed to the separation function layer. When the O/N ratio or the $O_{533 eV}$/N ratio is large, the hydrophilicity of the space existing on the surface or inside the separation function layer (the free volume space of the components constituting the separation function layer) increases, and as a result, the space through which the solvent (in particular, water) can highly selectively permeate increases, the water permeability (solvent permeability) of the forward osmosis membrane is improved. On the other hand, for example, when the degree of crosslinking is low in the separation function layer composed of polyamide, the relative elemental ratio of oxygen atoms may increase due to an increase in uncrosslinked terminal functional groups. In this case, by using in combination IR measurement described below, the effect of the uncrosslinked terminal functional groups of the separation function layer on the O/N ratio or the $O_{533 eV}$/N ratio is taken into consideration, and the proportion of water molecules strongly adsorbed to the separation function layer or hydrophilic compound adsorbed by hydrophilization treatment can be more accurately estimated. When the degree of crosslinking of the separation function layer is small, the disadvantage of a significantly increased reverse salt diffusion amount is often more pronounced than the advantage of improved water permeability of the forward osmosis membrane, resulting in lower performance of the forward osmosis membrane. Presumably, this is due to, for example, an uncrosslinked low molecular weight oligomer in the separation function layer, and when the low molecular weight oligomer desorbs, large holes are formed in the separation function layer, and the large holes are spaces where reverse diffusion of the draw solute can easily occur (separation function layer defects).

In the present embodiment, since the separation function layer has a high degree of crosslinking and can strongly adsorb and support a hydrophilic substance, the space through which a solvent can highly selectively permeate is increased, and the space in which reverse diffusion for the draw solute is difficult can be formed. Therefore, according to the present embodiment, a high-performance forward osmosis membrane having high water permeability (solvent permeability) and low reverse salt diffusion amount is provided.

In one aspect, nitrogen atoms are derived from the constituent material of the separation function layer, particularly a macromolecular polymer. Specifically, in one aspect, the separation function layer comprises a nitrogen-containing material. Although the presence of a hydrophilic structure on a surface of the separation function layer contributes to improving water permeability, excessive adsorption of hydrophilic substances increases reverse diffusion of the draw solution in forward osmosis method, and osmotic pressure difference via the separation function layer decreases, which rather decreases water permeability. Thus, it is preferable that the $O_{533 eV}$/N ratio be controlled within a moderate range. The $O_{533 eV}$/N ratio, in one aspect, is 0.29 or greater, 0.30 or greater, 0.35 or greater, 0.40 or greater, 0.43 or greater, or 0.45 or greater, and in one aspect, is 0.53 or less, 0.51 or less, or 0.48 or less. The above range is particularly advantageous in a separation function layer composed of a polyamide consisting of a bifunctional amine having two or more amino groups per molecule and a trifunctional carboxylic acid halide having three or more carboxylic acid halide groups per molecule. The $O_{533 eV}$/N ratio can be controlled by adjusting the constituent material of the separation function layer. For example, the composition of the macromolecular polymer constituting the separation function layer and the composition of the hydrophilic organic compound used for hydrophilizing the macromolecular polymer may be adjusted. The $O_{533 eV}$/N ratio can be evaluated based on the method described in the Examples below.

($IR_{1720}$/$IR_{1650}$)

In one aspect, the ratio $IR_{1720}$/$IR_{1650}$ of the peak top intensity at 1720 cm$^{-1}$ to the peak top intensity at 1650 cm$^{-1}$ in the IR measurement of the surface of the separation function layer is 0.25 or less, or 0.20 or less. IR measurement can be used as an example in order to more accurately estimate the proportion of water molecules strongly adsorbed to the separation function layer or hydrophilic compound adsorbed by hydrophilization treatment in the O/N ratio and the $O_{533 eV}$/N ratio. As one aspect, in the separation function layer composed of polyamide, one of the uncrosslinked functional group terminals is carboxylic acid (COOH). In this case, the relative elemental concentration ratio of the oxygen element is affected by the uncrosslinked terminal. If this effect is large, the O/N ratio and the $O_{533\,eV}$/N ratio are expected to be large. Additionally, a separation function layer having a large number of uncrosslinked terminals has a low degree of crosslinking, and thus may have low blocking properties and low performance as a forward osmosis membrane as a result. Generally, in the IR spectrum, since C=O stretching vibration of carboxylic acid is observed in near 1720 cm$^{-1}$ and the amide I band comprising the C=O stretching vibration of amide bond is observed near 1650 cm$^{-1}$, the intensity ratio ($IR_{1720}$/$IR_{1650}$) of amide to carboxylic acid is a measure of the degree of crosslinking in the polyamide. Considering that the carboxylic acid spectrum falls on the tail of the amide spectrum, it is advantageous that $IR_{1720}$/$IR_{1650}$ be 0.25 or less or 0.20 or less. Presumably, within the above range, the effect of carboxylic acid on the O/N ratio or $O_{533\,eV}$/N ratio is small, and the O/N ratio or $O_{533\,eV}$/N ratio is represented more accurately by the proportion of water molecules strongly adsorbed to the separation function layer or hydrophilic compound absorbed by hydrophilization treatment. Specifically, the separation function layer is a polyamide layer, and having an O/N ratio and/or an $O_{533\,eV}$/N ratio in the above range together with $IR_{1720}$/$IR_{1650}$ in the above range indicates that the separation function layer has a high degree of crosslinking and can strongly adsorb and support hydrophilic substances. $IR_{1720}$/$IR_{1650}$ can be evaluated based on the method described in the Examples below. The baseline when calculating the peak intensity ratio by IR measurement is set as follows. Specifically, if absorbance at 1800 cm$^{-1}$ is low and stable, the absorbance at 1800 cm$^{-1}$ is used. If the absorbance at 1800 cm$^{-1}$ is high or unstable, where the absorbance is low and stable in the range of 1800 to 2500 cm$^{-1}$ is applied as the baseline. When a separation function layer other than a polyamide layer is used, by comparing crosslinked functional groups and uncrosslinked functional groups by any known method, the proportion of water molecules strongly adsorbed to the separation function layer or hydrophilic compound absorbed by hydrophilization treatment can be estimated in the same manner.

[Characteristics of forward osmosis membrane]

(Shape)

The forward osmosis membrane of the present embodiment may be a hollow-fiber membrane or a flat membrane, but is preferably a hollow-fiber membrane. Hollow-fiber membranes are advantageous in that a larger membrane area can be accommodated in a smaller space when modularized and separation function layers can be easily formed without defects. From the viewpoint of preventing physical damage to the separation function layer, it is more preferable to arrange the separation function layer on the inner surface of a hollow-fiber membrane.

(Water permeation amount and reverse salt diffusion amount)

The forward osmosis membrane of the present embodiment has both high water permeability (i.e., high water permeation amount F) and high blocking properties (i.e., low reverse salt diffusion amount R). The water permeation amount F and the reverse salt diffusion amount R are evaluated by using purified water as the feed solution, using a 3.5% by mass sodium chloride aqueous solution as the draw solution, and carrying out a forward osmosis treatment under the condition of each solution at 25 °C.

Depending on whether the feed solution or the draw solution is arranged on the separation function layer side or the support membrane side of the present disclosure, the water permeation amount F may vary significantly.

In the present embodiment, when the forward osmosis membrane is provided for actual use, in order to further reduce the risk of contamination of the membrane, it is desirable that the feed solution be arranged on the separation function layer side and the draw solution be arranged on the support membrane side. When evaluating the water permeation amount and the reverse salt diffusion amount of the forward osmosis membrane, it is desirable that the feed solution be arranged on the separation function layer side and the draw solution be arranged on the support membrane side so as to reflect performance in actual use.

The reverse salt diffusion amount R (RSF) of the forward osmosis membrane means the amount of solute transferred from the draw solution to the feed solution when the forward osmosis membrane is sandwiched between the feed solution arranged on the separation function layer side and the draw solution having a higher osmotic pressure arranged on the support membrane side. The reverse salt diffusion amount R is defined by the following formula (1).

$$R = G/(M \times H) \qquad (1)$$

wherein G is the amount (g) of solute transferred, M is the effective surface area (m$^2$) of the forward osmosis membrane, and H is time (hr).

The lower the reverse salt diffusion amount R of the forward osmosis membrane of the present embodiment, the more preferable. The larger the reverse salt diffusion amount, problems such as: the greater the amount of solute mixed in the draw solution to the feed solution; the greater the amount of solute mixed in the feed solution to the draw solution; the lower the purity of the feed solution concentrate, and imbalance of the components of the solutions; contamination of the draw solution; and depletion of components in the draw solution over time, may occur. In one aspect, the reverse salt diffusion amount R of the forward osmosis membrane of the present embodiment is 2.0 g/(m$^2$ × hr) or less, preferably 1.2 g/(m$^2$ × hr) or less, more preferably 0.80 g/(m$^2$ × hr) or less, even more preferably 0.40 g/(m$^2$ × hr) or less, and particularly preferably 0.30 g/(m$^2$ × hr) or less. Even when the reverse salt diffusion amount R of the forward osmosis membrane of the present embodiment is 0.001 g/(m$^2$ × hr) or more, the advantageous effects expected by the present invention are exhibited.

The water permeation amount F (Flux) of the forward osmosis membrane means the amount of water transferred from the feed solution to the draw solution when the forward osmosis membrane is sandwiched between the feed solution arranged on the separation function layer side and the draw solution having a higher osmotic pressure arranged on the support membrane side. The water permeation amount F of the forward osmosis membrane is defined by the following formula (2).

$$F = L/(M \times H) \qquad (2)$$

wherein L is the amount (kg) of water permeated, M is the effective surface area (m$^2$) of the forward osmosis membrane, and H is time (hr).

The higher the water permeation amount F of the forward osmosis membrane of the present embodiment, the more preferable. From the viewpoint of achieving a highly efficient solvent transfer, the water permeation amount F of the forward osmosis membrane is preferably 3.0 kg/(m$^2$ × hr) or more, 5.0 kg/(m$^2$ × hr) or more, 7.0 kg/(m$^2$ × hr) or more, 8.0 kg/(m$^2$ × hr) or more, 9.0 kg/(m$^2$ × hr) or more, or 10.0 kg/(m$^2$ × hr) or more. However, when the water permeation amount is excessively large, reverse salt diffusion amount may increase, and thus the water permeation amount F of the forward osmosis membrane is preferably 50 kg/(m$^2$ × hr) or less.

In the present embodiment, salt permselectivity R/F (RSF/Flux: unit of g/kg), which is defined as a value obtained by dividing the reverse salt diffusion amount R by the water permeation amount F, is an index representing the selectivity of solvent permeation and salt permeation, i.e., the overall performance of the forward osmosis membrane. The lower this value, the more difficult it is for salts to permeate and the easier it is for solvents to permeate. Therefore, the lower the value, the more preferable. In general forward osmosis membranes of the prior art, when the reverse salt diffusion amount decreases, the water permeation amount often decreases significantly, and as a result, the value of R/F often increases. From the viewpoints of practicality in concentrating the feed solution and a highly efficient solvent transfer, the R/F value of the forward osmosis membrane of the present embodiment in the initial state (standard) is preferably 0.20 g/kg or less, 0.15 g/kg or less, 0.10 g/kg or less, 0.08 g/kg or less, 0.07 g/kg or less, 0.06 g/kg or less, 0.05 g/kg or less, 0.04 g/kg or less, or 0.035 g/kg or less. The value of R/F is ideally 0 g/kg, but may be, for example, 0.0001 g/kg or more in terms of ease of production of the forward osmosis membrane.

<<Method for producing forward osmosis membrane>>

One aspect of the present invention is to provide a method for producing a forward osmosis membrane. In one aspect, the forward osmosis membrane may be the forward osmosis membrane of the present embodiment described above. In one aspect, the method comprises:

a step of forming a macromolecular polymer constituting a separation function layer on a porous support membrane to obtain a composite membrane,
a step of subjecting the composite membrane to a wet-heat treatment to obtain a wet-heat-treated membrane, and
a step of bringing the wet-heat-treated membrane into contact with a hydrophilic organic compound.

In one aspect, the forward osmosis membrane obtained by the method of the present embodiment has a unique feature of achieving both low salt permselectivity and a high water permeation amount under reverse pressure. In one aspect, when a forward osmosis evaluation is caried out at 25 °C while the forward osmosis membrane is interposed between purified water as a feed solution arranged on the separation function layer side and a 3.5% by mass sodium chloride aqueous solution as a draw solution arranged on the porous support membrane side and a pressure of 40 kPa is applied with the draw solution side as positive (i.e., while a reverse pressure is applied), the water permeation amount F into the draw solution is 5.0 kg/(m$^2$ × hr) or more, and the water permeation amount F (value in units of kg/(m$^2$ × hr)) into the draw solution and the reverse salt diffusion amount R (value in units of g/(m$^2$ × hr)) into the feed solution satisfy the function represented by the following formula: R < 0.05e$^{0.225 \times F}$. In one aspect, in the above forward osmosis evaluation, the salt permselectivity R/F to a certain feed solution, which is a ratio of the reverse salt diffusion amount R

(g/(m$^2$ × hr)) into the feed solution relative to the water permeation amount F (kg/(m$^2$ × hr)) into the draw solution, is 0.10 g/kg or less, and the water permeation amount F into the draw solution is 5.0 kg/(m$^2$ × hr) or more.

The forward osmosis membrane satisfying the function represented by the above formula: R ≤ 0.05e$^{0.225 × F}$ is an index of the forward osmosis membrane having excellent salt permselectivity and resistance to reverse pressure. In one aspect, the value obtained by subtracting the value of R from the value of 0.05 × e$^{0.225 × F}$ of the above formula and represented in the unit g/(m$^2$ × hr) is 0 g/(m$^2$ × hr) or more, 0.01 g/(m$^2$ × hr) or more, 0.05 g/(m$^2$ × hr), 0.1 g/(m$^2$ × hr) or more, or 0.2 g/(m$^2$ × hr) or more from the viewpoint of satisfactory overall performance of the forward osmosis membrane under reverse pressure, and in one aspect, is 50.0 g/(m$^2$ × hr) or less, 10.0 g/(m$^2$ × hr) or less, 5.0 g/(m$^2$ × hr) or less, or 1.0 g/(m$^2$ × hr) or less from the viewpoint of ease of production of the forward osmosis membrane.

In one aspect, the R/F ratio is 0.10 g/kg or less, 0.09 g/kg or less, 0.08 g/kg or less, 0.07 g/kg or less, 0.06 g/kg or less, 0.05 g/kg or less, 0.04 g/kg or less, 0.035 g/kg or less, or 0.03 g/kg or less from the viewpoint of satisfactory overall performance under a reverse pressure of the forward osmosis membrane. The R/F ratio is preferably as small as possible, but in one aspect, may be 0.0001 g/kg or more, 0.0002 g/kg or more, or 0.0005 g/kg or more from the viewpoint of ease of production of the forward osmosis membrane.

In one aspect, the above water permeation amount F is 5.0 kg/(m$^2$ × hr) or more, 6.0 kg/(m$^2$ × hr) or more, 7.0 kg/(m$^2$ × hr) or more, 8.0 kg/(m$^2$ × hr) or more, 9.0 kg/(m$^2$ × hr) or more, or 10.0 kg/(m$^2$ × hr) or more from the viewpoint of satisfactory water permeability under a reverse pressure of the forward osmosis membrane. The water permeation amount is preferably as high as possible, but in one aspect, may be 50.0 kg/(m$^2$ × hr) or less, 25.0 kg/(m$^2$ × hr) or less, or 20.0 kg/(m$^2$ × hr) or less from the viewpoint of satisfactorily maintaining blocking properties and resistance to reverse pressure.

Hereinafter, each step of the method of the present embodiment will be described.

<Step of forming separation function layer on porous support membrane to obtain composite membrane>

In the present step, a macromolecular polymer constituting a separation function layer is formed on a porous support membrane to obtain a composite membrane. A hollow-fiber membrane and a flat membrane, as examples of the porous support membrane, can be produced, for example, by the following procedures.

[Production of hollow-fiber membrane]

When the porous support membrane is a hollow-fiber membrane, the hollow-fiber membrane can be produced by a known dry-wet membrane formation method, a melt membrane formation method, or a wet membrane formation method, using a material selected from the thermoplastic resins described above. Of these, a dry-wet spinning method in which a spinning dope having a resin (polymer) dissolved in a solvent and an inner portion solidification liquid are discharged from a double-tube nozzle (spinneret), allowed to run in air, and then solidified in a solidification bath containing an outer portion solidification liquid to form a hollow-fiber membrane is preferably used. The resulting hollow fibers may be wound on a winder and cut into a predetermined length.

(Spinning dope)

An aprotic polar organic solvent such as N-methyl-2-pyrrolidone, dimethylacetamide, or dimethylformamide is preferably used as a solvent (good solvent) of the spinning dope in this method. The spinning dope may contain a non-solvent of the resin. Glycols such as polyethylene glycol and polypropylene glycol, electrolytes, or polyvinylpyrrolidone can be used as non-solvents in the spinning dope. Of these, glycols are preferable because of spinnability and good quality of membranes obtained.

The solvent/non-solvent ratio is preferably set so that the mass ratio of non-solvent/(solvent + non-solvent) is within the range of 50 to 90% of the mass ratio at the compatibilization limit. The compatibilization limit is the point at which a polymer solution can no longer be a uniform solution and undergoes phase separation. Since the compatibilization limit is generally a function of temperature, it is necessary that the non-solvent content ratio be set based on the compatibilization limit at the spinning temperature.

When the mass ratio of non-solvent/(solvent + non-solvent) is less than 50% of the mass ratio at the compatibilization limit, the spinning dope viscosity may be too low and spinnability may deteriorate. However, when this value exceeds 90%, the controllability of the cross-sectional shape of the hollow-fiber support membrane may deteriorate.

For the same reason, the temperature of the spinning dope when forming the hollow-fiber porous support membrane is preferably 30 to 80 °C, and more preferably 35 to 60 °C.

The polymer concentration in the spinning dope is preferably 10 to 30% by mass, and more preferably 15 to 25% by mass. The polymer concentration in the spinning dope is particularly related to the strength of the resulting hollow-fiber support membrane. When the polymer concentration in the spinning dope is within the above range, a hollow-fiber support membrane having excellent membrane strength can be obtained.

When preparing the spinning dope, the spinning dope may be stirred at a predetermined temperature for 24 h or more and then degassed under reduced pressure.

(Inner portion solidification liquid)

During membrane formation of the hollow-fiber porous support membrane, for example, as described above, a double spinneret is used, a spinning dope is discharged from a circular port on the outside thereof, and an inner portion solidification liquid is discharged from an inside port.

As the inner portion solidification liquid, for example, an aqueous solution comprising water as the main component and one or more additives selected from alcohols (monoalcohols, glycols, and glycerin) and amide-based solvents can be used.

Examples of the monoalcohol can include methanol, ethanol, and isopropyl alcohol. Examples of the glycol can include ethylene glycols such as triethylene glycol and tetraethylene glycol. Examples of the amide solvent can include N-methyl-2-pyrrolidone, N,N-dimethylacetamide, and N,N-dimethylformamide.

By including such an additive in the inner portion solidification liquid, the solidification rate can be controlled, and a porous support membrane having a desired structure can be easily obtained. For example, when the inner portion solidification liquid comprises an additive, solidification is delayed and the pore size on the surface can be sparse. However, when the amount of the additive in the inner portion solidification liquid is too large, spinning stability may deteriorate or the surface pore size may coarsen, making the formation of the separation function layer difficult.

As the inner portion solidification liquid, it is preferable to use water or a mixed liquid of water and a small amount of an additive from the viewpoints of spinning stability and variability of membrane performance. When the inner portion solidification liquid comprises a glycol as an additive, the content thereof is preferably 60% by mass or less, more preferably 40% by mass or less, even more preferably 20% by mass or less, particularly preferably 10% by mass or less, and most preferably 5% by mass or less. When the value exceeds 60% by mass, the balance between the sizes of pores of the inner and outer surfaces of the resulting hollow-fiber membrane is difficult to maintain, and particularly the pores on the inner surface tend to be coarse.

Water is preferably used as the inner portion solidification liquid. The inner portion solidification liquid is preferably adjusted to an appropriate temperature before being subjected to spinning. The temperature of the inner portion solidification liquid is preferably not excessively high from the viewpoint of uniformizing the structure near the inner surface of the hollow-fiber membrane, and is preferably not excessively low from the viewpoints of keeping the structure of the inner surface side of the hollow-fiber membrane from becoming too dense, allowing the monomer supply to satisfactorily proceed during separation function layer formation, and obtaining satisfactory water permeability of the forward osmosis membrane. From the above viewpoints, the temperature of the inner portion solidification liquid is preferably 5 to 55 °C, 10 to 40 °C, or 15 to 35 °C.

(Outer portion solidification liquid)

The outer portion solidification liquid used as a solidification bath may comprise one or more additional components selected from water, non-solvents exemplified as an additive in the inner portion solidification liquid, and organic solvents. The outer portion solidification liquid may be a liquid of the same composition as the inner portion solidification liquid, or may be a liquid of a different composition.

As the outer portion solidification liquid, it is preferable to use water or a mixed liquid of water and a non-solvent exemplified above as an additive in the inner portion solidification liquid. When a mixture of water and an additive selected from alcohols (monoalcohols and glycols such as ethylene glycol) and amide-based solvents is used as an outer portion solidification liquid, the addition amount of the additive relative to the total mass of the outer portion solidification liquid is preferably 40% by mass or less, more preferably 30% by mass or less, even more preferably 15% by mass or less, and particularly preferably 5% by mass or less. The outer portion solidification liquid is most preferably water. When the amount of additive in the outer portion solidification liquid is excessive, solidification of the hollow-fiber support membrane outer surface side may be delayed and the membrane shape may be nonuniform.

The temperature of the solidification bath is preferably 10 to 60 °C, more preferably 20 to 50 °C, and even more preferably 25 to 40 °C. When the temperature of the solidification bath is higher, the structure of the resulting hollow-fiber support member tends to be sparse and the hollow-fiber support membrane tends to have a higher water permeability, thereby increasing the water permeability of the forward osmosis membrane. When the temperature of the solidification bath is excessively high, the surface pore size tends to be large, which may cause defects when passing chemicals in the subsequent formation of the separation function layer and increase the reverse salt diffusion amount of the resulting forward osmosis membrane. When the temperature of the solidification bath is low, the structure of the support membrane tends to be dense, and the water permeability of the hollow-fiber support membrane and the forward osmosis membrane may decrease. The lower the temperature of the solidification bath, the higher the spinning stability and the more uniform the structure of the resulting hollow-fiber membrane.

[Production of flat membrane]

A flat porous support membrane can be produced, for example, by the following method using the resin solution exemplified as one used in the production of the hollow-fiber support membrane. For example, the resin solution is applied on a glass substrate and immersed in a solidification liquid having the same composition as the outer portion solidification liquid for solidification, followed by separating the solidified support membrane from the glass substrate, casting the resin solution on a nonwoven fabric acting as a base material, and immersing in a solidification liquid for solidification, whereby a flat porous support membrane can be obtained. Membrane formation conditions such as composition of the resin solution and composition of the solidification liquid can be appropriately set by a person skilled in the art with reference to known techniques and the above method for producing a hollow-fiber support membrane.

[Formation of macromolecular polymer]

A composite membrane can be obtained by forming a macromolecular polymer constituting a separation function layer on the porous support membrane obtained as described above. In one aspect, the separation function layer is a crosslinked polyamide layer obtained by reacting a polyfunctional amine with a polyfunctional acid halide (for example, a polyfunctional acid chloride). The crosslinked polyamide can be formed by interfacial polycondensation on the surface of the porous support membrane using an aqueous solution containing a polyfunctional amine and an organic solvent solution containing a polyfunctional acid halide. In the present embodiment, examples of a preferable method of forming a macromolecular polymer include a method of sequentially passing a first solution containing one of a polyfunctional amine and a polyfunctional acid halide and a second solution containing the other over the support membrane. An aspect in which both the polyfunctional amine and the polyfunctional acid halide are contained in one solution is not preferable. In the present embodiment, for example, the polyfunctional amine may be contained in the first solution, and the polyfunctional acid halide may be contained in the second solution.

(Polyfunctional amine)

In one aspect, the polyfunctional amine comprises two or more of at least one of a primary amino group and a secondary amino group per molecule, and at least one of the amino groups is a primary amino group. Examples thereof include aromatic polyfunctional amines such as o-phenylenediamine, m-phenylenediamine, p-phenylenediamine, o-xylylenediamine, m-xylylenediamine, p-xylylenediamine, 1,3,5-triaminobenzene, 1,2,4-triaminobenzene, 3,5-diaminobenzoic acid, 3-aminobenzylamine, and 4-aminobenzylamine; aliphatic amines such as ethylenediamine and propylenediamine; and alicyclic polyfunctional amines such as 1,2-diaminocyclohexane, 1,4-diaminocyclohexane, 4-aminopiperidine, and 4-aminoethylpiperazine. Of these, aromatic polyfunctional amines having 2 to 4 of at least one of a primary amino group and a secondary amino group per molecule are preferable, in consideration of separation performance, water permeation resistance, and heat resistance. As such a polyfunctional aromatic amine, m-phenylenediamine, p-phenylenediamine, or 1,3,5-triaminobenzene is preferably used. Particularly, it is more preferable to use m-phenylenediamine because of availability and ease of handling. These polyfunctional amines can be used singly or as a mixture of two or more. When mixing two or more polyfunctional amines, the above amines may be combined with each other, or may be combined with an amine having at least two secondary amino groups per molecule. Examples of the anime having at least two secondary amino groups per molecule include piperazine and 1,3-bispiperidylpropane.

(Polyfunctional acid halide)

A polyfunctional acid halide is an acid halide having at least two halogenated carbonyl groups per molecule. For example,

as a trifunctional acid halide, there are trimesic acid chloride, 1,3,5-cyclohexanetricarboxylic acid trichloride, and 1,2,4-cyclobutanetricarboxylic acid trichloride; and
as a bifunctional acid halide, there are aromatic bifunctional acid halides such as biphenyldicarboxylic acid dichloride, azobenzenedicarboxylic acid dichloride, terephthalic acid chloride, isophthalic acid chloride, and naphthalenedicarboxylic acid chloride; aliphatic bifunctional acid halides such as adipoyl chloride and sebacoyl chloride; and alicyclic bifunctional acid halide such as cyclopentanedicarboxylic acid dichloride, cyclohexanedicarboxylic acid dichloride, and tetrahydrofurandicarboxylic acid dichloride.

In consideration of reactivity with the polyfunctional amine, the polyfunctional acid halide is preferably a polyfunctional acid chloride. Further, in consideration of separation performance and heat resistance of the resulting forward osmosis membrane, the polyfunctional acid halide is more preferably a polyfunctional aromatic acid chloride having 2 to 4 carbonyl chloride groups per molecule. Particularly, it is preferable to use trimesic acid chloride from the viewpoint of availability and ease of handling.

These polyfunctional acid halides can be used singly or as a mixture of two or more.

(Solvent and monomer solution concentration)

The polyfunctional amine and the polyfunctional acid halide are each dissolved in an appropriate solvent and subjected to interfacial polycondensation as a first solution or a second solution. The solvents for the first solution and the second solution preferably dissolve the monomers contained in the respective solutions, form a liquid-liquid interface without dissolving each other when the two solutions come into contact, and do not destroy the support membrane. Solvents that are inert to polyfunctional amine compounds and polyfunctional acid halides are even more preferable. Examples of such solvents include the following solvents.

Examples of the solvent for polyfunctional amines include one or more selected from water and alcohols. Examples of the solvent for polyfunctional acid halides include one or more selected from hydrocarbon solvents such as n-hexane, cyclohexane, n-heptane, n-octane, n-nonane, and n-decane.

By selecting the above solvents as the respective solvents for the polyfunctional amine and the polyfunctional acid halide, the polyfunctional amine solution and the polyfunctional acid halide solution become immiscible and interfacial polycondensation reaction proceeds, whereby a thin membrane of macromolecular polymer (polyamide) is obtained. The composition and concentration of each solution should be set according to the type of monomer and the partition coefficient with respect to the solvent, are not particularly limited, and can be appropriately set according to the desired separation function.

For example, taking the interfacial polycondensation when a m-phenylenediamine aqueous solution as the polyfunctional amine solution and a solution of trimesic acid chloride in n-hexane as the polyfunctional acid halide solution are used as an example, the suitable monomer concentrations are as follows:

The concentration of m-phenylenediamine is preferably 0.1 to 10% by mass, more preferably 0.5 to 5.0% by mass, and particularly preferably 1.0 to 3.0% by mass. The concentration of trimesic acid chloride is preferably 0.01 to 10% by mass, and more preferably 0.04 to 2.0% by mass. When the concentrations of these solutions are too low, the formation of the separation function layer by interfacial polycondensation is incomplete and defects are likely to occur, resulting in a decrease in separation performance when used as a forward osmosis membrane. Conversely, when the concentrations of these solutions are too high, the formed polyamide separation function layer is too thick, which results in a decrease in water permeation amount, and the amount of residual unreacted substances in the separation function layer increases, which may adversely affect performance as a forward osmosis membrane.

(Additive for polymerization)

The polyfunctional amine solution or the polyfunctional acid halide solution may comprise additives such as surfactants, organic solvents (excluding the organic solvent in the polyfunctional acid halide solution), organic acid salts, basic compounds, and antioxidants as long as the reaction between the polyfunctional amine and the polyfunctional acid halide is not significantly impaired.

The surfactant has an effect of improving wettability of the surface of the porous support membrane and reducing interfacial tension between the amine solution and a nonpolar solvent. Since the organic solvent may act as a catalyst for interfacial polycondensation reaction, the addition of the organic solvent may make the interfacial polycondensation reaction more efficient. The organic acid salt can change the wettability of the surface of the porous support membrane, and may lead to improved membrane formability and improved separation performance when used as a forward osmosis membrane. The basic compound can remove hydrogen halides generated by polymerization, and therefore may accelerate the polymerization.

Examples of the additive for polymerization include surfactants such as sodium dodecylbenzenesulfonate, sodium dodecyl sulfate, and sodium lauryl sulfate; organic solvents such as ethanol, isopropanol, N,N-dimethylformamide, and ε-caprolactam; organic acid salts consisting of mixtures of amines such as triethylamine and organic acids such as camphorsulfonic acid; basic compounds such as sodium hydroxide, trisodium phosphate and triethylamine; phenol-based antioxidants, amine-based antioxidants, sulfur-based antioxidants, phosphorus-based antioxidants, and acylation catalysts.

<Step of subjecting composite membrane to wet-heat treatment to obtain wet-heat treated membrane>

In the present step, the composite membrane obtained in the above step is subjected to a wet-heat treatment so that the macromolecular polymer constituting the separation function layer can be crosslinked. In the present disclosure, a wet-heat treatment means a treatment in which the composite membrane is brought into contact with a water-containing medium having a temperature of 50 °C or higher. The wet-heat treatment has an effect of adjusting the higher-order structure of the separation function layer and/or improving crosslinking density, thereby improving physical strength and solvent resistance of the separation function layer. Improvement of physical strength and/or solvent resistance of the separation function layer also contributes to preventing separation of the separation function layer from the porous support membrane when a reverse pressure is applied. In order to impart a more significant effect, the temperature of the water-containing medium is more preferably 70 °C or higher, and even more preferably 85 °C or higher.

When subjected to a heat treatment in a dry state, a composite membrane may dry out excessively, causing deformation of the porous support membrane, particularly by the contraction of pores of the porous support membrane. When pores of the porous support membrane contract, water permeability of the resulting forward osmosis membrane may be reduced. When the porous support membrane is deformed, deformation of the separation function layer may be induced and salt blocking performance by the separation function layer may be reduced. Heat treatment in a dry state has a problem of nonuniform and insufficient heating of the forward osmosis membrane, the insufficient wet state causes a decrease in mobility of the separation function layer, and thus a problem of an insufficient increase in crosslinking may arise. From the above viewpoints, the heat treatment in a dry state is preferably carried out for a short period of time (for example, 15 min or less) and more preferably not carried out.

Examples of the wet-heat treatment method include permeation of a wet gas (for example, water vapor, nitrogen or air containing moisture) heated through a heat source, exposure to a wet gas, and permeation of a heated water-containing medium (for example, hot water). Only one type of heat treatment may be carried out, two or more types of heat treatments may be carried out in combination, or the same treatment may be repeated multiple times. The "permeation" herein means a treatment in which a fluid is supplied to the composite membrane to bring the fluid into contact with the separation function layer and the porous support membrane. Examples of a preferable permeation method include a method of supplying a liquid to one or both surfaces of the composite membrane and allowing the fluid to distribute both surfaces and the inner portion (including inside the pores of the porous support membrane) of the composite membrane.

For example, in the method of supplying hot water, a method of distributing hot water at, for example, 50 °C to 100 °C, preferably 70 °C to 95 °C, to at least the separation function layer side of the composite membrane is preferable from the viewpoint of heat transfer efficiency. According to this method, heat is uniformly transferred to the separation function layer and residual monomers in the porous support membrane are washed away, making occurrence of unintended reactions difficult. The distribution time of hot water is preferably 5 min or more in order to allow the crosslinking reaction to proceed favorably. On the other hand, when the distribution time exceeds 2 h, the degree of effect improvement from the supply time of hot water is small, and thus the distribution time is preferably 2 h or less.

In one aspect, the wet-heat treatment is carried out under a heated and pressurized wet gas atmosphere. The temperature of the heated and pressurized wet gas may be, for example, higher than 100 °C and 160 °C or lower, or higher than 100 °C and 140 °C or lower. The pressure of the heated and pressurized wet gas may be, for example, 102 kPaA to 620 kPaA, 140 kPaA to 360 kPaA, or 190 kPaA to 320 kPaA in absolute pressure. By bringing the composite membrane into contact with the heated and pressurized wet gas, the macromolecular polymer can be efficiently crosslinked while suppressing damage to the porous support membrane.

In one aspect, the wet-heat treatment is carried out by bringing the composite membrane in contact with water vapor at 100 °C or higher. The temperature of the water vapor may be, for example, 100 °C or higher and 160 °C or lower, or 100 °C or higher and 140 °C or lower.

The contact time of the heated and pressurized wet gas or water vapor with the composite membrane is preferably 1 min or more in order to allow the crosslinking reaction to proceed favorably. On the other hand, when the contact time exceeds 4 h, the degree of effect improvement is small even if the contact time were extended, and thus the contact time is preferably 4 h or less.

A wet-heat-treated membrane can be obtained by the wet-heat treatment as exemplified above.

[Step of bringing hydrophilic organic compound into contact with wet-heat-treated membrane]

In the present step, a hydrophilic organic compound is brought into contact with the wet-heat-treated membrane. As a result, a separation function layer having hydrophilized surface and inner portion is formed. Such a separation function layer is advantageous in improving water permeability of the forward osmosis membrane.

Examples of the hydrophilic organic compound include alcohols, carboxylic acids, esters, ketones, nitriles, ethers, and amides. The alcohol may comprise glycol and/or glycerin, and from the viewpoints that the hydrophilization effect is satisfactory and causing damage to the porous support membrane and the separation function layer is difficult, is preferably an alcohol having 1 to 4 carbon atoms, and is more preferably one or more selected from the group consisting of methanol, ethanol, 1-propanol, isopropanol, 1-butanol, isobutanol, sec-butanol, and tert-butanol. The carboxylic acid can be exemplified by acetic acid and oxalic acid; the ester by methyl acetate and ethyl acetate; the ketone by acetone; the nitrile by acetonitrile; the ether by tetrahydrofuran and 1,4-dioxane; and the amide by dimethylformamide and N-methylpyrrolidone. These hydrophilic organic compounds are preferably used within a composition range that does not significantly damage the forward osmosis membrane.

Examples of the method of bringing the hydrophilic organic compound into contact with the wet-heat-treated membrane include a method of bringing an aqueous solution comprising, for example, 5% by mass or greater, 10% by mass or greater, 20% by mass or greater, 30% by mass or greater, 40% by mass or greater, 50% by mass or greater, 60% by mass or greater, 70% by mass or greater, or 80% by mass or greater of a hydrophilic organic compound into contact with the wet-heat-treated membrane. Examples of the contact method include one or a combination of two or more of a method of immersing the wet-heat-treated membrane in the above aqueous solution, a method of passing the above aqueous solution through the wet-heat-treated membrane, and a method of filtering the above aqueous solution through the wet-heat-treated membrane. The contact time is preferably 5 min or more from the viewpoint of obtaining a satisfactory hydrophilization effect, and is preferably 300 min or less from the viewpoint of process efficiency.

In one aspect, the composite membrane is preferably hydrophilized in a state where the degree of crosslinking of the separation function layer is further increased by the wet-heat treatment. In this case, defects (i.e., defects that increase reverse salt diffusion) resulting from the detachment of oligomers from the separation function layer or excessive swelling of the separation function layer due to hydrophilization treatment are less likely to occur, while the effect of improving water permeability is enhanced. Thus, a forward osmosis membrane having high water permeability and low reverse salt diffusion amount can be prepared.

<<Forward osmosis membrane module>>

A plurality of the forward osmosis membranes in the present embodiment may be housed in a housing to form a forward osmosis membrane module. The shape of the forward osmosis membrane module is not particularly limited. Typically, compartments in liquid contact with only one surface side of the membrane (for example, the inner surface sides of the hollow-fiber membranes) are isolated from compartments in liquid contact with only the other surface side of the membrane (for example, the outer surface side of the hollow-fiber membranes). For example, the above isolation may be achieved by fixing the membranes to the module housing with an adhesive resin. For example, a urethane-based or epoxy-based adhesive can be used as the adhesive resin. The size of the housing is not particularly limited, but may be, for example, a cylindrical housing having a diameter of 10 to 500 mm and a length of 20 to 10,000 mm.

FIG. 1 shows a schematic cross-sectional diagram showing the structure of a hollow-fiber membrane module as one example of the forward osmosis membrane module. In the hollow-fiber membrane module (1) shown in FIG. 1, a fiber bundle composed of a plurality of hollow-fiber membranes (4) is packed into a cylindrical housing, and both ends of the hollow-fiber bundle are attached to adhesive fixing portions (5, 6) and fixed to the cylinder. The housing comprises outside conduits (2, 3) on the sides thereof and is sealed by headers (7, 8). The adhesive fixing portions (5, 6) are each solidified so as to not block the hollow portions of the hollow-fiber membranes (4). The headers (7, 8) each comprise an inside conduit (9, 10) in communication with the insides (hollow portions) of the hollow-fiber membranes (4) and not in communication with the outside. These inside conduits (9, 10) allow a liquid to be introduced to or extracted from the insides of the hollow-fiber membranes (4). The outside conduits (2, 3) each communicate with the outside of the hollow-fiber membranes (4) and do not communicate with the insides.

The hollow-fiber membrane module (1) has a structure in which a liquid flowing on the insides and a liquid flowing on the outside come into contact only via the hollow-fiber membranes (4).

<<Substance in contact with forward osmosis membrane>>

[Organic solvent and organic compound]

In the present embodiment, the organic solvent that is brought into contact with the forward osmosis membrane during use (i.e., the organic solvent that may be contained in the feed solution or the draw solution) may be any substance that does not instantaneously dissolve the forward osmosis membrane. The instantaneous dissolution of the forward osmosis membrane refers to the forward osmosis membrane not remaining in original form within 1 h when brought into contact with an organic solvent.

The organic solvent may be a general organic solvent used for industrial and research purposes. Examples of the organic solvent include lower alcohols such as methanol, ethanol, 1-propanol and 2-propanol; nitriles such as acetonitrile; higher alcohols having 6 or more carbon atoms; glycols such as ethylene glycol and propylene glycol; hydrocarbons such as pentane, hexane, decane, undecane and cyclooctane; mixtures consisting of two or more thereof; and mixtures thereof with water.

Organic solvents that are often contained in foods and pharmaceuticals and to which forward osmosis membranes have durability are preferable. Examples thereof include alcohols (monoalcohols and glycols) and nitriles.

Examples of the organic compound include carboxylic acids such as acetic acid, acrylic acid, propionic acid, formic acid, lactic acid, oxalic acid, tartaric acid, and benzoic acid; organic acids such as sulfonic acid, sulfinic acid, barbituric acid, uric acid, phenol, enol, diketone-type compounds, thiophenol, imide, oxime, aromatic sulfonamide, primary nitro compounds, secondary nitro compounds; aromatic hydrocarbons such as benzene, toluene and xylene; mineral oils; ketones such as acetone and methyl isobutyl ketone; aldehydes such as acetaldehyde; ethers such as dioxane and tetrahydrofuran; amides such as dimethylformamide and N-methylpyrrolidone; nitrogen-containing organic compounds such as pyridine; esters such as acetate and acrylate; organic compounds for industrial and research purposes such as dimethyl sulfoxide; and saccharides, fertilizers, and enzymes.

When these organic compounds are contained in the above organic solvents in a range not dissolving the forward osmosis membrane instantaneously, and is brought into contact with the forward osmosis membrane of the present embodiment, durability of the forward osmosis membrane can be a problem.

[Draw solution]

The draw solution is a solution that exhibits a higher osmotic pressure than the feed solution and has a function of transferring a solvent from the feed solution via the forward osmosis membrane.

The draw solution contains a high concentration of draw solute and thereby exhibits a high osmotic pressure.

Examples of the draw solute include alkali metal salts, alkaline earth metal salts, ammonium salts, saccharides, monoalcohols, glycols, and water-soluble polymers. Specific examples of each thereof can include:

as the alkali metal salt: sodium chloride, potassium chloride, sodium sulfate, sodium thiosulfate, and sodium sulfite;
as the alkaline earth metal salt: magnesium chloride, calcium chloride, and magnesium sulfate;
as the ammonium salt: ammonium chloride, ammonium sulfate, and ammonium carbonate;
as the saccharide: in addition to general saccharides such as sucrose, fructose, and glucose, special saccharides such as oligosaccharides and rare saccharides;
as the monoalcohol: methanol, ethanol, 1-propanol, and 2-propanol;
as the glycol: ethylene glycol and propylene glycol; and
as the water-soluble polymer: polyethylene oxide, polypropylene oxide, and copolymers of ethylene oxide and propylene oxide.

EXAMPLES

Hereinafter, the aspects exemplifying the present invention will be further described by way of the Examples. However, the present invention is not limited to these Examples.

«Evaluation method»

[Surface pore size]

For the hollow-fiber forward osmosis membranes, one forward osmosis membrane (total of 3 membranes) was taken out from each of the three locations in the radial direction of the forward osmosis membrane module: an outer peripheral portion, an intermediate portion, and a center portion, and the membranes were each divided into 3 equal portions in the longitudinal direction to obtain samples at 9 locations.

For the flat forward osmosis membrane, the forward osmosis membrane was divided into 9 portions by dividing each side thereof into 3 equal parts to obtain samples at 9 locations.

For both the hollow-fiber forward osmosis membrane and the flat forward osmosis membrane, the measurement value was calculated as an average value of 9 samples.

A surface image of each sample was acquired as follows.

Each sample was immersed in an aqueous solution consisting of 2.0% by mass of sodium hypochlorite, 2.0% by mass of sodium hydroxide, and 0.15% by mass of calcium chloride at 60 °C for 200 h. Each fiber was then sufficiently washed with pure water to obtain a support membrane sample from which the separation function layer was removed. In the case of a hollow-fiber sample having a separation function layer on an inner surface, each sample was cut obliquely at the center to expose the surface of the porous support membrane. The surface that was in contact with the separation function layer of the resulting sample was observed with a scanning electron microscope. The sample was immersed in pure water in a dedicated glass container, frozen in liquid nitrogen, and then dried by a freeze-drying method. The sample was further thinly coated with osmium to obtain an observation sample. Using a scanning electron microscope (S-4800, manufactured by Hitachi High-Tech Corporation), the observation sample was photographed under the following conditions.

Acceleration voltage: 1.0 kV
Emission current: 10 μA
Probe current: normal
Detector: upper
Magnification: 50,000×
Number of pixels: 1280 × 960
Working distance: 5.0 mm

The surface pore size was defined as the number average value of circular equivalent diameters of pores contained in an arbitrarily selected 1.0 μm × 1.0 μm visual field on the surface image. Specifically, image processing was carried out by image processing software (ImageJ; developer: U.S. National Institutes of Health). The surface image was imported into the image processing software, binarized by the Otsu method, and the area of surface pore portions was calculated. The resulting area value was converted to the total pore area in one image using a calibration curve prepared in advance. By counting the number of pore portions and dividing the total pore area by the total number of pore portions, the area per pore portion was calculated, the equivalent circle thereof was determined, and the diameter thereof was calculated. The pore size per pore portion was thereby defined as the average surface pore size in one image.

[Support membrane dimensions]

The inner diameter, outer diameter, and membrane thickness of the hollow-fiber support membrane and the membrane thickness of the flat support membrane were measured as the support membrane dimensions.
In the case of a hollow-fiber support membrane, measurement was carried out using an optical microscope photograph (cross-sectional image) of a cross-section obtained by cutting along a plane perpendicular to the membrane surface direction (longitudinal direction). The outer diameter and the inner diameter of the cross-sectional image were measured with a scale. The membrane thickness was calculated by dividing the difference between the outer diameter and the inner diameter by two. The outer diameter and the inner diameter referred to herein are the outer diameter and the inner diameter of a hollow fiber, respectively.
In the case of a flat membrane support membrane, measurement was carried out using an optical microscope photograph (cross-sectional image) of a cross-section obtained by cutting along a plane perpendicular to the membrane surface direction. The membrane thickness of the cross-sectional image was measured with a scale.
In the present Example, the inner diameter, outer diameter, and membrane thickness of the support membrane were measured after being made into a forward osmosis membrane. Note that it has been confirmed that the values are identical within margin of error even when only the support membrane is used for measurement.

[Presence/absence of irregular structure]

The presence/absence of an irregular structure was evaluated by carrying out an atomic force microscope (AFM) analysis on 9 samples obtained from the forward osmosis membrane and calculating the arithmetic mean height (Sa) defined by ISO 25178.
Regarding the hollow-fiber forward osmosis membranes, under the condition that the forward osmosis membranes were not dried out, one forward osmosis membrane (total of 3 membranes) was taken out from each of the three locations in the radial direction of the forward osmosis membrane module: an outer peripheral portion, an intermediate portion, and a center portion, and each was divided into 3 equal portions in the longitudinal direction to obtain samples at 9 locations. In addition, a surface of the separation function layer was exposed, and the outermost surface of the separation function layer was scanned under the following conditions to determine the arithmetic mean height (Sa).
Regarding the flat forward osmosis membrane, without drying out, the forward osmosis membrane was divided into 9 portions by dividing each side thereof into 3 equal parts to obtain samples at 9 locations. In addition, the outermost surface of the separation function layer was scanned under the following conditions to determine the arithmetic mean height (Sa).
For both the hollow-fiber forward osmosis membrane and the flat forward osmosis membrane, the measurement value was calculated as an average value of 9 samples.

Measurement mode: QNM in fluid (measured in pure water)

Visual field size: 3-$\mu$m square
Probe used: OLTESPA

When the arithmetic mean height (Sa) calculated as an average value of 9 samples was 40 nm or more, the separation function layer was considered to have an irregular structure, and when the arithmetic mean height (Sa) was less than 40 nm, the separation function layer was not considered to have an irregular structure.

[O/N ratio]

The separation function layer surface of the forward osmosis membrane was measured using an X-ray photoelectron spectrometer.

In the case of a hollow-fiber forward osmosis membrane, 5 forward osmosis membranes were taken out from near the center portion in the radial direction of the forward osmosis membrane module and further divided into 5 equal portions in the length direction to obtain a total of 25 samples. Each sample was then cut from near the center in the length direction so as to have a length of 3 mm and used as an XPS measurement sample. Each sample was immersed in pure water, frozen with liquid nitrogen, and then dried by a freeze-drying method. The separation function layer was further exposed by cutting open the hollow fibers along the length direction, and one piece thereof was used as an XPS measurement sample.

In the case of a flat forward osmosis membrane, the flat membrane was immersed in pure water, frozen with liquid nitrogen, dried by a freeze-drying method, and divided into 25 equal portions by dividing each side of the forward osmosis membrane into 5 equal parts to obtain samples at 25 locations. The center portion of each sample was then cut into a 3-mm square and used as an XPS measurement sample.

For both the hollow-fiber forward osmosis membrane and the flat forward osmosis membrane, the measurement value was calculated as an average value of 25 samples. The measurement was carried out by the XPS measurement method described below, the elemental composition ratio of the separation function layer surface was measured at 25 points, and the average value of the O/N ratios was calculated.

[$O_{533\ eV}$/N ratio]

The separation function layer surface of the forward osmosis membrane was measured using an X-ray photoelectron spectrometer. Measurement samples prepared by the same procedure as the above XPS measurement samples were used. For both the hollow-fiber forward osmosis membrane and the flat forward osmosis membrane, the measurement value was calculated as an average value of 25 samples. The elemental composition ratio on the separation function layer surface was measured at 25 arbitrary points at a photoelectron detection angle of 45 degrees, and the average value of the O/N ratios was calculated. The above XPS measurement sample was retained on a sample holder with double-sided tape, and the separation function layer side was measured. The measurement location was specified using the SXI (Scanning X-ray Image) function included with the apparatus.

[XPS measurement conditions]

Equipment used: ULVAC-PHI VersaProbe II
Excitation source: mono. Al K$\alpha$ 20 kV $\times$ 5 mA 100 W
Analysis size: 100 $\mu$m $\varphi$ $\times$ 1.4 mm
At the time of data capture, an X-ray beam of about 100 $\mu$m $\varphi$ was oscillated parallel to the fiber axis at a width of 1.4 mm.
Photoelectron extraction angle: 45°
Capture area

Survey scan: 0 to 1,100 eV
Narrow scan: C1s, O1s, N1s, S2p, Si2p

Pass Energy

Survey scan: 117.4 eV
Narrow scan: 46.95 eV

Energy step

Survey scan: 1 eV
Narrow scan: 0.1 eV
Charge neutralization: electron gun, Ar+ ion gun under predetermined standard conditions

[Data processing]

Quantitative analysis and curve fitting of the O1s spectrum were carried out using the data processing function of the software included with the apparatus (MultiPak 9.6.0.15).

[Quantitative analysis]

From the obtained area intensities of C1s, O1s, N1s, S2p, and Si2p, relative elemental concentration of each element was determined using the following formula.

$$C_j \, (\%) = 100 \times (I_j/RSF_j)/\Sigma(I_j/RSF_j)$$

wherein each parameter is as follows:

$C_j$: relative elemental concentration (atomic%)
$I_j$: area intensity of C1s, O1s, N1s, S2p, Si2p spectra (unit is cps·eV)
$RSF_j$: individual corrected relative sensitivity factor of C1s, O1s, N1s, S2p, Si2p (values below)

C1s: 14.496
O1s: 34.046
N1s: 23.107
S2p: 74.406
Si2p: 39.979

[O1s spectrum curve fit]

The O concentration determined by the above quantitative analysis was separated into a 531 eV component (O=C double bond) and a 533 eV component (derived from adsorbed water and hydroxy groups) using the following procedure and constraints.

(1) Charge correction was carried out on the energy value based on the benzene ring component (284.6 eV) of the C1s spectrum.
(2) Curve fitting of the O1s spectrum was carried out under the following constraints.

- Background is set as a straight line from near 528 eV to near 538 eV.
- Number of components is set to two, the 531 eV component and the 533 eV component.
- Peak position of the 531 eV component is fixed at 531.2 eV.
- Full widths at half maximum (FWHM) of the 531 eV component and the 533 eV component are set to be equal.

[$IR_{1720}/IR_{1650}$]

The separation function layer surface of the forward osmosis membrane was measured using an FT-IR apparatus.
In the case of a hollow-fiber forward osmosis membrane, 5 forward osmosis membranes were taken out from near the center portion in the radial direction of the forward osmosis membrane module and further divided into 5 equal portions in the length direction to obtain a total of 25 samples. Each sample was then cut from near the center in the length direction so as to have a length of 10 mm. The samples were immersed in pure water and frozen with liquid nitrogen, followed by drying by a freeze-drying method. Each sample were fixed at both ends with double-sided tape on a glass plate, and the separation function layer was exposed by cutting open along the length direction of the hollow fibers. A length of 5 mm was further cut out from near the center in the length direction of each sample to obtain an IR measurement sample.

In the case of a flat forward osmosis membrane, the flat membrane was immersed in pure water, frozen with liquid nitrogen, dried by a freeze-drying method, and divided into 25 equal portions by dividing each side of the forward osmosis membrane into 5 equal parts to obtain samples at 25 locations. The center portion of each sample was then cut into a 5-mm square and used as an IR measurement sample. Each IR measurement sample was retained on a slide glass with double-sided tape, and the separation function layer surface was measured.

<<IR measurement conditions>>

Equipment used: FT-IR apparatus LUMOS by Bruker
Measurement method: total reflection absorption method (ATR method: attenuated total reflection)
ATR crystal: germanium
Scan resolution: 4 cm$^{-1}$
Number of scans: 64 times
Detector: MCT detector
Aperture size: 124 $\mu$m $\times$ 124 $\mu$m
Crystal pressing pressure: low or medium
Measurement scan range: 450 to 4000 cm$^{-1}$

«Peak intensity ratio calculation»

The 1650 cm$^{-1}$ peak absorbance Abs(h1650) derived from the C=O stretching vibration of the amide bond (amide I) and the 1720 cm$^{-1}$ peak absorbance Abs(h1720) derived from the C=O stretching vibration of the carboxylic acid were determined. The absorbance (baseline) at 1800 cm$^{-1}$ where the absorbance is low and stable was defined as Abs(h1800) and substituted into the following formula to calculate the IR peak intensity ratio.

[Math 1]

$$\frac{IR_{1720}}{IR_{1650}} = \frac{Abs(h1720) - Abs(h1800)}{Abs(h1650) - Abs(h1800)}$$

[Ethanol swelling rate]

The ethanol swelling rate of the forward osmosis membrane was measured. For a hollow-fiber membrane, the membrane was cut so as to be about 100 mm in the longitudinal direction, and the longitudinal direction length was measured. For a flat membrane, the membrane was cut so as to be about 100 mm in the longitudinal direction and 10 mm in the width direction. The forward osmosis membranes were immersed in 99.5% pure ethanol (manufactured by Fujifilm Wako Pure Chemical Corporation) at 25 °C for 48 h. The length of each membrane after immersion in ethanol was measured, and the swelling was calculated by the following formula:

Ethanol swelling (%) = {(length of membrane after immersion/length of membrane before immersion) - 1} $\times$ 100

When deformation such as waviness occurred to the forward osmosis membrane after ethanol immersion, the length was measured while holding by hand to the extent that the membrane did not deform excessively.
Note that, the forward osmosis membranes of the following Examples and Comparative Examples were not completely dissolved after being immersed in ethanol at 25 °C for 48 h.

[Water permeation amount F and reverse salt diffusion amount R under reverse pressure]

For the water permeation amount F and the reverse salt diffusion amount R of the forward osmosis membrane, a forward osmosis evaluation was carried out for 60 min, while purified water was used as the feed solution, a 3.5% by mass sodium chloride aqueous solution was used as the draw solution, the feed solution was arranged on the separation function layer side of the forward osmosis membrane, and the draw solution was arranged on the porous support membrane side thereof, and a pressure of 40 kPa was applied with the draw solution side as positive. The evaluation conditions for the hollow-fiber forward osmosis membrane were as follows. The flat forward osmosis membrane was evaluated under the same temperature conditions and by setting the same membrane surface linear velocities. A saturated sodium chloride aqueous solution was dripped to keep the draw solution concentration constant during the evaluation.

Feed solution temperature: 25 °C
Draw solution temperature: 25 °C
Membrane surface linear velocity of feed solution : 3.0 cm/sec
Membrane surface linear velocity of draw solution: 3.0 cm/sec

[Example 1]

(Preparation of hollow-fiber porous support membrane)

A uniform polymer solution consisting of 19% by mass of polysulfone (manufactured by Solvay Specialty Polymers, Udel-P3500), 61% by mass of N-methyl-2-pyrrolidone (manufactured by Fujifilm Wako Pure Chemical Corporation), and 20% by weight of tetraethylene glycol (manufactured by Tokyo Chemical Industry Co., Ltd.) was prepared as a spinning dope. A wet hollow fiber spinning machine equipped with a double spinneret was filled with the above spinning dope. From the double spinneret, the spinning dope at 40 °C and an inner portion solidification liquid (water) at 25 °C were discharged and allowed to run 250 mm in air with a relative humidity of 98% adjusted to 25 °C, followed by solidification in a solidification bath (outer portion solidification liquid) filled with water at 30 °C and winding at a tension of 25 g using a free roll as a turn roll to obtain a hollow-fiber support membrane.
The resulting hollow-fiber support membrane had an outer diameter of 1.02 mm, an inner diameter of 0.62 mm, and a membrane thickness of 0.20 mm.

(Preparation of support membrane module)

130 of the above hollow-fiber support membranes cut to a length of 120 mm were packed into a cylindrical plastic housing having a diameter of 20 mm and a length of 80 mm and both ends were fixed with an adhesive to prepare a support membrane module having an effective membrane inner surface area of 0.02 $m^2$ and having the structure shown in FIG. 1.

(Formation of separation function layer)

An aqueous solution (first solution) comprising 2.1% by mass of m-phenylenediamine (MPD) and 0.15% by mass of sodium lauryl sulfate (SDS) was passed through the insides of the hollow-fiber support membranes in the above support membrane module for 20 min. After the solution passage was completed, the first solution was removed from the pipe at the module lower portion by gravity fall, the pressure in outer portion of the support membrane module was reduced to 10 kPaA while the insides of the hollow fibers were wet with the first solution, and the reduced-pressure state was held for 1 min. Air was then blown inside the hollow fibers at a linear velocity of 210 cm/sec for 1 min to remove excess first solution. Subsequently, an n-hexane solution (second solution) containing 0.18% by mass of trimesic acid chloride (TMC) was passed through the insides of the hollow fibers for 2 min to cause interfacial polymerization and form a macromolecular polymer on the inner surfaces of the hollow fibers to obtain composite membranes. Nitrogen gas was then flowed at a linear velocity of 210 cm/sec for 1 min to remove excess second solution, followed by flowing water at 25 °C inside the hollow fibers at a linear velocity of 5 cm/sec for 5 min to wash the surfaces. The module was then placed in an autoclave (AC; manufactured by Tomy Seiko Co., Ltd., SX-500) with both ends of the hollow-fiber membranes open, and high-temperature water vapor at 121 °C was distributed inside the autoclave chamber for 20 min to carry out curing (wet-heat treatment), whereby wet-heat-treated membranes were obtained. The inner surfaces of the wet-heat-treated hollow-fiber support membranes were washed with water at 20 °C for 30 min.
According to the above procedure, a forward osmosis membrane module was obtained. In the forward osmosis membrane obtained in Example 1, the arithmetic mean height (Sa) of the separation function layer was 121 nm, and the value of $IR_{1720}/IR_{1650}$ was 0.11.

[Examples 2 to 8 and 10 to 12]

Except that after the wet-heat treatment and before washing with water, a wet-heat-treated membrane was immersed in an aqueous solution of a hydrophilic organic compound having the type and concentration indicated in Table 1 to carry out a hydrophilization treatment, followed by washing with water for 1 h or more, a forward osmosis membrane module was obtained by the same procedure as in Example 1. The hydrophilization treatment time is as indicated in Table 1.

[Example 9]

Except that polyethersulfone (manufactured by BASF, Ultrason E2020P) was used in place of polysulfone, a forward osmosis membrane module was obtained by the same procedure as in Example 8.

[Examples 13 and 14]

Except that hot water at 85 °C was allowed to permeate through the insides of the hollow fibers for 20 min as a wet-heat treatment in place of an autoclave treatment, a forward osmosis membrane module was obtained by the same procedure as in Examples 1 (for Example 13) or Example 5 (for Example 14).

[Example 15]

Except that the membrane formation conditions of the hollow-fiber support membranes are as indicated in Tables 1 and 2 and the membrane areas were matched, a forward osmosis membrane module was obtained by the same procedure as in Example 5.

[Example 16]

Except that the membrane formation conditions of the hollow-fiber support membranes and the formation conditions of the separation function layer were as indicated in Tables 1 to 3 and the membrane areas were matched, a forward osmosis membrane module was obtained by the same procedure as in Example 8.

[Comparative Examples 1 and 2]

Except that a module was placed in a dryer to be dried at 50 °C as a dry-heat treatment in place of the wet-heat treatment, a forward osmosis membrane module was obtained by the same procedure as in Example 1 (for Comparative Example 1) or Example 8 (for Comparative Example 2).

[Comparative Example 3]

Except that in the formation of the separation function layer, sodium lauryl sulfate as an additive for polymerization was not used, and the monomer concentration was set as indicated in Table 3, whereby an irregular structure was not provided to the separation function layer, a forward osmosis membrane module was obtained by the same procedure as in Example 8. In the forward osmosis membrane obtained in Comparative Example 3, the arithmetic mean height (Sa) of the separation function layer was 24 nm.

[Comparative Example 4]

(Preparation of flat porous support membrane)

A 20% by weight solution of polysulfone in dimethylformamide (DMF) was cast at 25 °C to a thickness of 190 $\mu$m on a polyester nonwoven fabric (airflow rate: 2 cc/(cm$^2$ × sec)), immersed in a solidification liquid at 25 °C, and left for 20 min to prepare a flat support membrane having a thickness of 200 $\mu$m consisting of a laminated body of a polyester nonwoven fabric base material and a polysulfone porous support. The surface of the support membrane on the polysulfone porous support side was brought into contact with an aqueous solution (first solution) comprising 2.1% by mass of m-phenylenediamine and 0.15% by mass of sodium lauryl sulfate for 20 min. Air was then flowed over the surface of the first solution coated surface to remove excess solution. Subsequently, an n-hexane solution (second solution) containing 0.18% by mass of trimesic acid chloride was brought into contact with the first solution coated surface for 2 min to carry out interfacial polymerization to form a separation function layer on the porous support.

Nitrogen gas was then flowed over the separation function layer formation surface to remove excess second solution, followed by passing water at 25 °C for 5 min on the surface of the support membrane on which the separation function layer was formed. The support membrane on which the separation function layer was formed was placed in an autoclave and high-temperature water vapor at 121 °C was distributed for 20 min, followed by immersing the wet-heat-treated membrane in an aqueous solution of a hydrophilic organic compound of the type and concentration indicated in Table 1 to carry out a hydrophilization treatment. The hydrophilized membrane was further washed with water at 20 °C for 60 min, whereby a flat forward osmosis membrane was obtained.

The resulting forward osmosis membrane was cut into a predetermined size and housed in a housing to prepare a flat membrane cell having a membrane area of 0.02 m$^2$.

Unlike the hollow-fiber membrane, the position of the separation function layer is indicated on the front and rear of the flat membrane. The rear is the side in contact with the nonwoven fabric during support membrane preparation, and the front is the side more in contact with the solidification liquid.

[Example 17]

Except that the membrane formation conditions of the hollow-fiber support membranes were as indicated in Tables 1 and 2 and the membrane areas were matched, a forward osmosis membrane module was obtained by the same procedure as in Example 8.

[Comparative Examples 5 and 6]

Except that a mixture of polyethersulfone (manufactured by BASF, Ultrason E2020P) to a hydroxyl group-modified polyethersulfone (manufactured by BASF, trade name: Ultrason E2020PSR) = 50:50 (molar ratio) in place of polysulfone was used and the membrane formation conditions of the hollow-fiber support membranes were as indicated in Tables 1 and 2, a forward osmosis membrane module was obtained by the same procedure as in Example 1 (for Comparative Example 6) or Example 8 (for Comparative Example 7).

[Example 18]

Except that the membrane formation conditions of the hollow-fiber support membranes were as indicated in Tables 1 and 2 and the membrane areas were matched, a forward osmosis membrane module was obtained by the same procedure as in Example 16.

[Comparative Examples 7 and 8]

Except that the membrane formation conditions of the hollow-fiber support membranes were as indicated in Tables 1 and 2, a forward osmosis membrane module was obtained by the same procedure as in Example 1 (for Comparative Example 7) or Example 8 (for Comparative Example 8).

[Comparative Example 9]

Except that membrane formation conditions of the hollow-fiber support membranes were as indicated in Tables 1 and 2, a forward osmosis membrane module was obtained by the same procedure as in Example 1. In Comparative Example 9, prior to use of trimesic acid chloride (TMC), 50 mL of purified water was added to TMC that had been heated to 35 °C to form a liquid, and the mixture was stirred for 2 h to partially deactivate the functional groups and then dissolved in n-hexane to prepare a second solution for use.

The results are shown in Tables 1 to 3.

[Table 1]

Table 1

| | Base material | Porous support membrane | | | | | | Separation function layer | | | | Wet-heat treatment | | Hydrophilic organic compound | | | Forward osmosis performance under reverse pressure | | | |
|---|---|---|---|---|---|---|---|---|---|---|---|---|---|---|---|---|---|---|---|---|
| | Yes/No | Shape | Material | Membrane thickness [μm] | Surface pore size [nm] | Dense layer | EtOH swelling [%] | O/N ratio | O533eV/N ratio | Irregular structure | IR1720/IR1650 | Method | Temperature | Type | Concentration [% by mass] | Contact time [hr] | Water permeation amount F [kg/(m²×hr)] | Reverse salt diffusion amount R [g/(m²×hr)] | R ≤ 0.05e$^{0.225F}$ satisfied | Salt permselectivity R/F [g/kg] |
| Example 1 | no | hollow fiber | PSf | 200 | 7.5 | inner surface | 2.9 | 1.35 | 0.32 | yes | 0.12 | AC | 121 | - | - | - | 7.5 | 0.18 | yes | 0.024 |
| Example 2 | no | hollow fiber | PSf | 200 | 7.5 | inner surface | 2.9 | 1.42 | 0.36 | yes | 0.13 | AC | 121 | EtOH | 5 | 2 | 8.0 | 0.18 | yes | 0.023 |
| Example 3 | no | hollow fiber | PSf | 200 | 7.5 | inner surface | 2.9 | 1.45 | 0.37 | yes | 0.14 | AC | 121 | EtOH | 20 | 2 | 8.2 | 0.18 | yes | 0.022 |
| Example 4 | no | hollow fiber | PSf | 200 | 7.5 | inner surface | 2.9 | 1.50 | 0.40 | yes | 0.15 | AC | 121 | EtOH | 40 | 2 | 9.6 | 0.21 | yes | 0.022 |
| Example 5 | no | hollow fiber | PSf | 200 | 7.5 | inner surface | 2.9 | 1.52 | 0.41 | yes | 0.16 | AC | 121 | EtOH | 60 | 2 | 10.3 | 0.21 | yes | 0.020 |
| Example 6 | no | hollow fiber | PSf | 200 | 7.5 | inner surface | 2.9 | 1.54 | 0.43 | yes | 0.18 | AC | 121 | EtOH | 60 | 48 | 10.5 | 0.23 | yes | 0.022 |
| Example 7 | no | hollow fiber | PSf | 200 | 7.5 | inner surface | 2.9 | 1.56 | 0.45 | yes | 0.18 | AC | 121 | EtOH | 80 | 2 | 10.4 | 0.22 | yes | 0.021 |
| Example 8 | no | hollow fiber | PSf | 200 | 7.5 | inner surface | 2.9 | 1.58 | 0.48 | yes | 0.19 | AC | 121 | EtOH | 100 | 1 | 10.5 | 0.26 | yes | 0.025 |
| Example 9 | no | hollow fiber | PES | 150 | 9.9 | inner surface | 3.3 | 1.64 | 0.51 | yes | 0.19 | AC | 121 | EtOH | 100 | 1 | 11.2 | 0.53 | yes | 0.047 |
| Example 10 | no | hollow fiber | PSf | 200 | 7.5 | inner surface | 2.9 | 1.59 | 0.45 | yes | 0.17 | AC | 121 | MeOH | 60 | 2 | 10.7 | 0.26 | yes | 0.024 |
| Example 11 | no | hollow fiber | PSf | 200 | 7.5 | inner surface | 2.9 | 1.51 | 0.41 | yes | 0.16 | AC | 121 | IPA | 60 | 2 | 10.1 | 0.22 | yes | 0.022 |
| Example 12 | no | hollow fiber | PSf | 200 | 7.5 | inner surface | 2.9 | 1.41 | 0.35 | yes | 0.16 | AC | 121 | tBuOH | 20 | 2 | 7.9 | 0.19 | yes | 0.024 |
| Example 13 | no | hollow fiber | PSf | 200 | 7.5 | inner surface | 2.9 | 1.31 | 0.29 | yes | 0.20 | hot water | 85 | - | - | - | 10.4 | 0.38 | yes | 0.037 |
| Example 14 | no | hollow fiber | PSf | 200 | 7.5 | inner surface | 2.9 | 1.56 | 0.44 | yes | 0.21 | hot water | 85 | EtOH | 60 | 2 | 16.2 | 1.32 | yes | 0.081 |
| Example 15 | no | hollow fiber | PSf | 80 | 11.5 | inner surface | 4.0 | 1.52 | 0.41 | yes | 0.19 | AC | 121 | EtOH | 60 | 2 | 13.5 | 0.78 | yes | 0.058 |
| Example 16 | no | hollow fiber | PSf | 350 | 1.7 | inner surface | 1.8 | 1.59 | 0.45 | yes | 0.18 | AC | 121 | EtOH | 100 | 10 | 5.1 | 0.12 | yes | 0.024 |
| Comparative Example 1 | no | hollow fiber | PSf | 200 | 7.5 | inner surface | 2.9 | 1.14 | 0.20 | yes | 0.15 | dry | 50 | - | - | - | 10.3 | 1.13 | no | 0.110 |
| Comparative Example 2 | no | hollow fiber | PSf | 200 | 7.5 | inner surface | 2.9 | 1.74 | 0.58 | yes | 0.19 | dry | 50 | EtOH | 100 | 1 | 16.1 | 2.81 | no | 0.174 |
| Comparative Example 3 | no | hollow fiber | PSf | 200 | 7.5 | inner surface | 2.9 | 1.58 | 0.45 | no | 0.30 | AC | 121 | EtOH | 100 | 1 | 12.0 | 4.43 | no | 0.369 |
| Comparative Example 4 | yes | flat membrane | PSf | 200 | 5.3 | surface | 0.7 | 1.63 | 0.47 | yes | 0.19 | AC | 121 | EtOH | 100 | 1 | 1.8 | 4.18 | no | 2.322 |
| Example 17 | no | hollow fiber | PSf | 50 | 13.2 | inner surface | 5.6 | 1.61 | 0.49 | yes | 0.18 | AC | 121 | EtOH | 100 | 1 | 14.5 | 1.25 | yes | 0.086 |
| Comparative Example 5 | no | hollow fiber | PES-OH | 150 | 15.1 | inner surface | 4.4 | 1.28 | 0.28 | yes | 0.21 | AC | 121 | - | - | - | 8.3 | 0.50 | no | 0.060 |
| Comparative Example 6 | no | hollow fiber | PES-OH | 150 | 15.1 | inner surface | 4.4 | 1.78 | 0.61 | yes | 0.25 | AC | 121 | EtOH | 100 | 1 | 21.4 | 13.53 | no | 0.632 |
| Example 18 | no | hollow fiber | PSf | 300 | <1.0 | inner surface | 0.9 | 1.59 | 0.45 | yes | 0.19 | AC | 121 | EtOH | 100 | 10 | 5.5 | 0.17 | yes | 0.031 |
| Comparative Example 7 | no | hollow fiber | PSf | 150 | 16.2 | inner surface | 4.5 | 1.26 | 0.27 | yes | 0.22 | AC | 121 | - | - | - | 7.8 | 0.59 | no | 0.076 |
| Comparative Example 8 | no | hollow fiber | PSf | 150 | 16.2 | inner surface | 4.5 | 1.71 | 0.56 | yes | 0.25 | AC | 121 | EtOH | 100 | 1 | 19.7 | 9.53 | no | 0.484 |
| Comparative Example 9 | no | hollow fiber | PSf | 200 | 7.5 | inner surface | 2.9 | 1.83 | 0.63 | yes | 0.54 | dry | 50 | - | - | - | 11.2 | 5.56 | no | 0.496 |

[Table 2]

Table 2

| | Spinning dope | | | | | | | Inner portion solidification liquid | | | Spinning dope temperature - inner portion solidification liquid temperature (outer surface or flat membrane if solidification bath temperature) [°C] | Running portion | Porous support membrane size | | | | |
|---|---|---|---|---|---|---|---|---|---|---|---|---|---|---|---|---|---|
| | Polymer type | Polymer [% by mass] | Solvent type | Solvent [% by mass] | Additive type | Additive [% by mass] | Temperature [°C] | Additive type | Additive [% by mass] | Temperature [°C] | | Running distance [mm] | Shape | Outer diameter [mm] | Inner diameter [mm] | Membrane thickness [mm] |
| Example 1 | PSf | 19 | NMP | 59.7 | TEG | 20.3 | 40 | - | - | 25 | 15 | 250 | hollow fiber | 1.02 | 0.62 | 0.2 |
| Example 2 | PSf | 19 | NMP | 59.7 | TEG | 20.3 | 40 | - | - | 25 | 15 | 250 | hollow fiber | 1.02 | 0.62 | 0.2 |
| Example 3 | PSf | 19 | NMP | 59.7 | TEG | 20.3 | 40 | - | - | 25 | 15 | 250 | hollow fiber | 1.02 | 0.62 | 0.2 |
| Example 4 | PSf | 19 | NMP | 59.7 | TEG | 20.3 | 40 | - | - | 25 | 15 | 250 | hollow fiber | 1.02 | 0.62 | 0.2 |
| Example 5 | PSf | 19 | NMP | 59.7 | TEG | 20.3 | 40 | - | - | 25 | 15 | 250 | hollow fiber | 1.02 | 0.62 | 0.2 |
| Example 6 | PSf | 19 | NMP | 59.7 | TEG | 20.3 | 40 | - | - | 25 | 15 | 250 | hollow fiber | 1.02 | 0.62 | 0.2 |
| Example 7 | PSf | 19 | NMP | 59.7 | TEG | 20.3 | 40 | - | - | 25 | 15 | 250 | hollow fiber | 1.02 | 0.62 | 0.2 |
| Example 8 | PSf | 19 | NMP | 59.7 | TEG | 20.3 | 40 | - | - | 25 | 15 | 250 | hollow fiber | 1.02 | 0.62 | 0.2 |
| Example 9 | PES | 19 | NMP | 59.7 | TEG | 20.3 | 40 | - | - | 20 | 20 | 250 | hollow fiber | 1.02 | 0.62 | 0.2 |
| Example 10 | PSf | 19 | NMP | 59.7 | TEG | 20.3 | 40 | - | - | 25 | 15 | 250 | hollow fiber | 1.02 | 0.62 | 0.2 |
| Example 11 | PSf | 19 | NMP | 59.7 | TEG | 20.3 | 40 | - | - | 25 | 15 | 250 | hollow fiber | 1.02 | 0.62 | 0.2 |
| Example 12 | PSf | 19 | NMP | 59.7 | TEG | 20.3 | 40 | - | - | 25 | 15 | 250 | hollow fiber | 1.02 | 0.62 | 0.2 |
| Example 13 | PSf | 19 | NMP | 59.7 | TEG | 20.3 | 40 | - | - | 25 | 15 | 250 | hollow fiber | 1.02 | 0.62 | 0.2 |
| Example 14 | PSf | 19 | NMP | 59.7 | TEG | 20.3 | 40 | - | - | 25 | 15 | 250 | hollow fiber | 1.02 | 0.62 | 0.2 |
| Example 15 | PSf | 18.5 | NMP | 61.2 | TEG | 20.3 | 40 | - | - | 20 | 20 | 250 | hollow fiber | 0.7 | 0.54 | 0.08 |
| Example 16 | PSf | 22 | NMP | 63 | TEG | 15 | 40 | - | - | 25 | 15 | 250 | hollow fiber | 1.3 | 0.6 | 0.35 |
| Comparative Example 1 | PSf | 19 | NMP | 59.7 | TEG | 20.3 | 40 | - | - | 25 | 15 | 250 | hollow fiber | 1.02 | 0.62 | 0.2 |
| Comparative Example 2 | PSf | 19 | NMP | 59.7 | TEG | 20.3 | 40 | - | - | 25 | 15 | 250 | hollow fiber | 1.02 | 0.62 | 0.2 |
| Comparative Example 3 | PSf | 19 | NMP | 59.7 | TEG | 20.3 | 40 | - | - | 25 | 15 | 250 | hollow fiber | 1.02 | 0.62 | 0.2 |
| Comparative Example 4 | PSf | 20 | DMF | 80 | none | 0 | 25 | - | - | - | 0 | - | flat membrane (material present) | - | - | 0.2 |
| Example 17 | PSf | 16 | NMP | 65 | TEG | 20 | 40 | - | - | 25 | 15 | 250 | hollow fiber | 0.5 | 0.4 | 0.05 |
| Comparative Example 5 | PES + PES - OH = 50:50 | 19 | NMP | 81 | none | 0 | 40 | TEG | 50 | 40 | 0 | 200 | hollow fiber | 1 | 0.7 | 0.15 |
| Comparative Example 6 | PES + PES - OH = 50:50 | 19 | NMP | 81 | none | 0 | 40 | TEG | 50 | 40 | 0 | 200 | hollow fiber | 1 | 0.7 | 0.15 |
| Example 18 | PSf | 24 | NMP | 70 | TEG | 5 | 40 | - | - | 10 | 30 | 250 | hollow fiber | 1.3 | 0.6 | 0.35 |
| Comparative Example 7 | PSf | 19 | NMP | 81 | none | 0 | 40 | TEG | 50 | 40 | 0 | 250 | hollow fiber | 1 | 0.7 | 0.15 |
| Comparative Example 8 | PSf | 19 | NMP | 81 | none | 0 | 40 | TEG | 50 | 40 | 0 | 250 | hollow fiber | 1 | 0.7 | 0.15 |
| Comparative Example 9 | PSf | 19 | NMP | 59.7 | TEG | 20.3 | 40 | - | - | 25 | 15 | 250 | hollow fiber | 1.02 | 0.62 | 0.2 |

[Table 3]

Table 3

| | Interfacial polymerization | MPD passage | | Depressurization (absolute pressure) | | | TMC passage | Washing | | | | Wet-heat treatment | | | Separation function layer |
|---|---|---|---|---|---|---|---|---|---|---|---|---|---|---|---|
| | Method | MPD concentration [% by mass] | SDS concentration [% by mass] | Inside pressure [kPaA] | Outside pressure [kPaA] | Inner-outer pressure difference [kPa] | TMC concentration [% by mass] | Method | Location | Temperature [°C] | Time [min] | Method | Temperature [°C] | Time [min] | Location |
| Example 1 | Outside depressurization | 2.1 | 0.15 | 101 | 11 | 90 | 0.18 | water | inner | 25 | 5 | AC | 121 | 20 | inner |
| Example 2 | Outside depressurization | 2.1 | 0.15 | 101 | 11 | 90 | 0.18 | water | inner | 25 | 5 | AC | 121 | 20 | inner |
| Example 3 | Outside depressurization | 2.1 | 0.15 | 101 | 11 | 90 | 0.18 | water | inner | 25 | 5 | AC | 121 | 20 | inner |
| Example 4 | Outside depressurization | 2.1 | 0.15 | 101 | 11 | 90 | 0.18 | water | inner | 25 | 5 | AC | 121 | 20 | inner |
| Example 5 | Outside depressurization | 2.1 | 0.15 | 101 | 11 | 90 | 0.18 | water | inner | 25 | 5 | AC | 121 | 20 | inner |
| Example 6 | Outside depressurization | 2.1 | 0.15 | 101 | 11 | 90 | 0.18 | water | inner | 25 | 5 | AC | 121 | 20 | inner |
| Example 7 | Outside depressurization | 2.1 | 0.15 | 101 | 11 | 90 | 0.18 | water | inner | 25 | 5 | AC | 121 | 20 | inner |
| Example 8 | Outside depressurization | 2.1 | 0.15 | 101 | 11 | 90 | 0.18 | water | inner | 25 | 5 | AC | 121 | 20 | inner |
| Example 9 | Outside depressurization | 2.1 | 0.15 | 101 | 11 | 90 | 0.18 | water | inner | 25 | 5 | AC | 121 | 20 | inner |
| Example 10 | Outside depressurization | 2.1 | 0.15 | 101 | 11 | 90 | 0.18 | water | inner | 25 | 5 | AC | 121 | 20 | inner |
| Example 11 | Outside depressurization | 2.1 | 0.15 | 101 | 11 | 90 | 0.18 | water | inner | 25 | 5 | AC | 121 | 20 | inner |
| Example 12 | Outside depressurization | 2.1 | 0.15 | 101 | 11 | 90 | 0.18 | water | inner | 25 | 5 | AC | 121 | 20 | inner |
| Example 13 | Outside depressurization | 2.1 | 0.15 | 101 | 11 | 90 | 0.18 | water | inner | 25 | 5 | hot water | 85 | 20 | inner |
| Example 14 | Outside depressurization | 2.1 | 0.15 | 101 | 11 | 90 | 0.18 | water | inner | 25 | 5 | hot water | 85 | 20 | inner |
| Example 15 | Outside depressurization | 2.1 | 0.15 | 101 | 11 | 90 | 0.18 | water | inner | 25 | 5 | AC | 121 | 20 | inner |
| Example 16 | Outside depressurization | 2.1 | 0.15 | 101 | 11 | 90 | 0.18 | water | inner | 25 | 5 | AC | 121 | 20 | inner |
| Comparative Example 1 | Outside depressurization | 2.1 | 0.15 | 101 | 11 | 90 | 0.18 | water | inner | 25 | 5 | drying | 50 | 20 | inner |
| Comparative Example 2 | Outside depressurization | 2.1 | 0.15 | 101 | 11 | 90 | 0.18 | water | inner | 25 | 5 | drying | 50 | 20 | inner |
| Comparative Example 3 | Outside depressurization | 1.2 | 0 | 101 | 11 | 90 | 0.20 | water | inner | 25 | 5 | AC | 121 | 20 | inner |
| Comparative Example 4 | Flat membrane | 2.1 | 0.15 | - | - | - | 0.18 | water | surface | 25 | 5 | AC | 121 | 20 | surface |
| Example 17 | Outside depressurization | 2.1 | 0.15 | 101 | 11 | 90 | 0.18 | water | inner | 25 | 5 | AC | 121 | 20 | inner |
| Comparative Example 5 | Outside depressurization | 2.1 | 0.15 | 101 | 11 | 90 | 0.18 | water | inner | 25 | 5 | AC | 121 | 20 | inner |
| Comparative Example 6 | Outside depressurization | 2.1 | 0.15 | 101 | 11 | 90 | 0.18 | water | inner | 25 | 5 | AC | 121 | 20 | inner |
| Example 18 | Outside depressurization | 2.1 | 0.15 | 101 | 11 | 90 | 0.18 | water | inner | 25 | 5 | AC | 121 | 20 | inner |
| Comparative Example 7 | Outside depressurization | 2.1 | 0.15 | 101 | 11 | 90 | 0.18 | water | inner | 25 | 5 | AC | 121 | 20 | inner |
| Comparative Example 8 | Outside depressurization | 2.1 | 0.15 | 101 | 11 | 90 | 0.18 | water | inner | 25 | 5 | AC | 121 | 20 | inner |
| Comparative Example 9 | Outside depressurization | 2.1 | 0.15 | 101 | 11 | 90 | 1.00* | water | inner | 25 | 5 | drying | 50 | 20 | inner |

*A solution that has been deactivated to some extent by adding water before use was used.

The abbreviations in the tables represent the following.

PSf: polysulfone
PES: polyethersulfone
PES-OH: hydroxy-terminated polyethersulfone
EtOH: ethanol
MeOH: methanol

IPA: isopropanol (2-propanol)
tBuOH: tert-butyl alcohol
AC: autoclave
NMP: N-methyl-2-pyrrolidone
DMF: N,N-dimethylformamide
TEG: tetraethylene glycol
MPD: m-phenylenediamine
SDS: sodium lauryl sulfate
TMC: 1,3,5-trimesic acid chloride

REFERENCE SIGNS LIST

1       hollow-fiber membrane module
2, 3    outside conduit
4       hollow-fiber membrane
5, 6    adhesive fixing portion
7, 8    header
9, 10   inside conduit

**Claims**

1.  A forward osmosis membrane comprising a porous support membrane and a separation function layer arranged on the porous support membrane, wherein

    the porous support membrane is in contact with the separation function layer only;
    the separation function layer is a polyamide layer;
    a ratio ($O_{533\,eV}$/N ratio) of a relative elemental concentration obtained by curve fitting centered at 533 eV in O1s spectrum to a relative elemental concentration obtained from N1s spectrum when a surface of the separation function layer is measured by X-ray photoelectron spectroscopy is 0.29 to 0.53; and
    a ratio ($IR_{1720}$/$IR_{1650}$) of an intensity of a peak top at 1720 $cm^{-1}$ to an intensity of a peak top at 1650 $cm^{-1}$ in an IR measurement of the separation function layer surface is 0.25 or less.

2.  The forward osmosis membrane according to claim 1, wherein the ratio ($O_{533\,eV}$/N ratio) is 0.30 to 0.53.

3.  The forward osmosis membrane according to claim 1, wherein the ratio ($O_{533\,eV}$/N ratio) is 0.35 to 0.51.

4.  The forward osmosis membrane according to claim 1, wherein a ratio (O/N ratio) of number of oxygen atoms to number of nitrogen atoms when a surface of the separation function layer is measured by X-ray photoelectron spectroscopy is 1.30 to 1.70.

5.  The forward osmosis membrane according to claim 1, wherein a ratio (O/N ratio) of number of oxygen atoms to number of nitrogen atoms when a surface of the separation function layer is measured by X-ray photoelectron spectroscopy is 1.40 to 1.65.

6.  The forward osmosis membrane according to claim 1, wherein the porous support membrane is a hollow-fiber membrane.

7.  The forward osmosis membrane according to claim 6, wherein the separation function layer is arranged on an inner surface of the hollow-fiber membrane.

8.  The forward osmosis membrane according to claim 1, wherein the porous support membrane comprises polysulfone or polyethersulfone as a main component.

9.  The forward osmosis membrane according to claim 1, wherein an ethanol swelling rate of the porous support membrane is 1% to 5%.

10. The forward osmosis membrane according to claim 1, wherein a surface pore size of the surface of the porous support membrane in contact with the separation function layer is 1 nm to 15 nm.

11. The forward osmosis membrane according to claim 1, wherein a surface pore size of the surface of the porous support membrane in contact with the separation function layer is 2.5 nm or more.

12. The forward osmosis membrane according to claim 1, wherein a surface pore size of the surface of the porous support membrane in contact with the separation function layer is 11 nm or less.

13. The forward osmosis membrane according to claim 1, wherein a membrane thickness of the porous support membrane is 50 $\mu$m to 400 $\mu$m.

14. The forward osmosis membrane according to claim 1, wherein the separation function layer has an irregular structure.

15. The forward osmosis membrane according to claim 1, wherein the separation function layer has an arithmetic mean height of 60 nm or more.

16. A method for producing a forward osmosis membrane comprising a porous support membrane and a separation function layer arranged on the porous support membrane, comprising the steps of:

forming a macromolecular polymer constituting a separation function layer on a porous support membrane to obtain a composite membrane;
subjecting the composite membrane to a wet-heat treatment to obtain a wet-heat-treated membrane; and
bringing the wet-heat-treated membrane into contact with a hydrophilic organic compound, wherein
when a forward osmosis evaluation is carried out while the forward osmosis membrane is interposed between purified water as a feed solution arranged on the separation function layer side and a 3.5% by mass sodium chloride aqueous solution as a draw solution arranged on the porous support membrane side and a pressure of 40 kPa is applied with the draw solution side as positive,

a water permeation amount F into the draw solution is 5.0 kg/($m^2 \times$ hr) or more, and
the water permeation amount F (kg/($m^2 \times$ hr)) and a reverse salt diffusion amount R (g/($m^2 \times$ hr)) to the feed solution satisfy a relationship represented by a formula below:

$$R \leq 0.05 \times e^{0.225 \times F}.$$

17. The method according to claim 16, wherein the porous support membrane is in contact with the separation function layer only.

18. The method according to claim 16, wherein the porous support membrane is a hollow-fiber membrane.

19. The method according to claim 18, wherein the separation function layer is arranged on an inner surface of the hollow-fiber membrane.

20. The method according to claim 16, wherein the porous support membrane comprises polysulfone or polyethersulfone as a main component.

21. The method according to claim 16, wherein the separation function layer is a layer of crosslinked polyamide obtained by reacting a polyfunctional amine with a polyfunctional acid halide.

22. The method according to claim 16, wherein the wet-heat treatment is carried out in a heated and pressurized wet gas atmosphere.

23. The method according to claim 16, wherein the wet-heat treatment is carried out by bringing the composite membrane into contact with water vapor at 100 °C or higher.

24. The method according to claim 16, wherein the hydrophilic organic compound is an alcohol having 1 to 4 carbon atoms.

**25.** The method according to claim 16, wherein the contact is carried out by bringing an aqueous solution containing the hydrophilic organic compound at a concentration of 40% by mass or greater into contact with the wet-heat-treated membrane.

**26.** The method according to claim 16, wherein the contact is carried out for 5 min or more.

**27.** The method according to claim 16, wherein the contact is carried out by one or more selected from the group consisting of immersion, liquid flow, and filtration.

**28.** The method according to claim 16, wherein an ethanol swelling rate of the porous support membrane is 1% to 5%.

**29.** The method according to claim 16, wherein a surface pore size of the porous support membrane is 15 nm or less.

**30.** The method according to claim 16, wherein a surface pore size of the porous support membrane is 3 nm to 10 nm.

**31.** The method according to claim 16, wherein a membrane thickness of the porous support membrane is 50 $\mu$m to 400 $\mu$m.

**32.** The method according to claim 16, wherein a salt permselectivity R/F, which is a ratio of the reverse salt diffusion amount R to the water permeation amount F, is 0.10 g/kg or less.

**33.** The method according to claim 16, wherein a salt permselectivity R/F, which is a ratio of the reverse salt diffusion amount R to the water permeation amount F, is 0.07 g/kg or less.

**34.** The method according to claim 16, wherein a salt permselectivity R/F, which is a ratio of the reverse salt diffusion amount R to the water permeation amount F, is 0.035 g/kg or less.

**35.** The method according to claim 16, wherein the water permeation amount F is 8.0 kg/(m$^2$ × hr) or more.

**36.** The method according to claim 16, wherein the water permeation amount F is 10.0 kg/(m$^2$ × hr) or more.

# FIG. 1

## INTERNATIONAL SEARCH REPORT

| International application No. |
| --- |
| **PCT/JP2022/025813** |

| **A.** | **CLASSIFICATION OF SUBJECT MATTER** |
| --- | --- |

***B01D 61/00***(2006.01)i; ***B01D 63/02***(2006.01)i; ***B01D 69/00***(2006.01)i; ***B01D 69/02***(2006.01)i; ***B01D 69/08***(2006.01)i; ***B01D 69/10***(2006.01)i; ***B01D 69/12***(2006.01)i; ***B01D 71/56***(2006.01)i; ***B01D 71/68***(2006.01)i
FI: B01D61/00 500; B01D63/02; B01D69/00; B01D69/02; B01D69/08; B01D69/10; B01D69/12; B01D71/56; B01D71/68

According to International Patent Classification (IPC) or to both national classification and IPC

| **B.** | **FIELDS SEARCHED** |
| --- | --- |

Minimum documentation searched (classification system followed by classification symbols)

B01D53/22, 61/00-71/82, C02F1/44

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | WO 2020/241860 A1 (ASAHI KASEI CORP.) 03 December 2020 (2020-12-03) paragraphs [0023]-[0108], fig. 1 | 1-15 |
| Y | | 16-36 |
| Y | JP 2018-12072 A (ASAHI KASEI CORP.) 25 January 2018 (2018-01-25) paragraphs [0037], [0082] | 16-36 |
| A | JP 2019-115897 A (KURARAY CO., LTD.) 18 July 2019 (2019-07-18) claims | 1-36 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 August 2022** | **16 August 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/025813**

| Patent document cited in search report | | | Publication date (day/month/year) | Patent family member(s) | Publication date (day/month/year) |
|---|---|---|---|---|---|
| WO | 2020/241860 | A1 | 03 December 2020 | CA 3142200 A1 paragraphs [0023]-[0108], fig. 1 | |
| JP | 2018-12072 | A | 25 January 2018 | (Family: none) | |
| JP | 2019-115897 | A | 18 July 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020241860 A
- JP 2010012455 A
- WO 2018003943 A

**Non-patent literature cited in the description**

- **MUKHERJEE et al.** Flux enhancement of reverse osmosis membranes by chemical surface modification. *Journal of Membrane Science,* 1994, vol. 97, 231-249